# EUROPEAN PATENT APPLICATION

(11) **EP 2 770 275 A1**
(43) Date of publication of application: **27.08.2014**
(21) Application number: 11874259.2
(22) Date of filing: 21.10.2011
(51) Int. Cl.: F25B 1/00

(54) **COOLING DEVICE AND CONTROL METHOD FOR COOLING DEVICE**

(71) Applicant: Toyota Jidosha Kabushiki Kaisha, Toyota-shi, Aichi 471-8571 (JP)
(72) Inventor: TAKAHASHI, Eizo, Toyota-shi, Aichi-ken, 471-8571 (JP); KAWAKAMI, Yoshiaki, Toyota-shi, Aichi-ken, 471-8571 (JP); JOJIMA, Yuki, Toyota-shi, Aichi-ken, 471-8571 (JP); SATO, Kousuke, Toyota-shi, Aichi-ken, 471-8571 (JP)
(74) Representative: TBK
(86) International application number: PCT/JP2011/074309
(87) International publication number: WO 2013/057832

(57) **Abstract**

A cooling device capable of achieving cooling performance suitable for an amount of generated heat from a heat source is provided. A cooling device (1) cooling HV equipment (31) includes a compressor (12) for circulating a coolant; a heat exchanger (14) performing heat exchange between the coolant and outside air; an expansion valve (16) decompressing the coolant; a heat exchanger (18) performing heat exchange between the coolant and air-conditioning air; a cooling unit (30) provided on a route of the coolant flowing between the heat exchanger (14) and the expansion valve (16), and cooling the HV equipment (31) using the coolant; a bypass route (41) bypassing the expansion valve (16) and the heat exchanger (18); and a switching valve (52) selectively switching between a flow of the coolant flowing from the cooling unit (30) toward the expansion valve (16) and a flow of the coolant flowing through the bypass route (41).

## Description

### TECHNICAL FIELD

The present invention relates to a cooling device and a method of controlling the cooling device, and particularly to a cooling device cooling a heat source utilizing a vapor compression refrigeration cycle and a method of controlling the cooling device.

### BACKGROUND ART

In recent years, as one of countermeasures against environmental problems, attention has been paid to a hybrid vehicle, a fuel cell vehicle, an electric vehicle, and the like running with driving force of a motor. In such vehicles, electric devices such as a motor, a generator, an inverter, a converter, and a battery generate heat by transmission and reception of electric power. Accordingly, there is a proposed technique for cooling a heat-generating body utilizing a vapor compression refrigeration cycle used as an air-conditioning apparatus for a vehicle.

For example, Japanese Patent Laying-Open No. 2007-69733 (PTD 1) discloses a system for cooling a heat-generating body utilizing a coolant for an air-conditioning device. In the system, a heat exchanger for performing heat exchange with air-conditioning air and a heat exchanger for performing heat exchange with the heat-generating body are arranged in parallel on a coolant passage extending from an expansion valve to a compressor. Japanese Patent Laying-Open No. 2005-90862 (PTD 2) discloses a cooling system, in which heat-generating body cooling means for cooling a heat-generating body is provided on a bypass passage bypassing a decompressor, an evaporator and a compressor in a refrigeration cycle for air-conditioning. Japanese Patent Laying-Open No. 2001-309506 (PTD 3) discloses a cooling system, in which a coolant of a refrigeration cycle device for vehicle air-conditioning is circulated to a cooling member of an inverter circuit portion for performing a drive control of a vehicle running motor, thereby suppressing cooling of air-conditioning air flow by an evaporator of the refrigeration cycle device for vehicle air-conditioning when cooling of the air-conditioning air flow is not required.

As to a vehicle air-conditioning apparatus, Japanese Patent Laying-Open No. 2011-1048 (PTD 4) discloses a vehicle air-conditioning system, in which a heat storage member of a heat storage unit for a vehicle cabin stores an amount of heat, and the heat storage unit for a vehicle cabin performs heat exchange of the amount of heat with a heat exchange medium.

### CITATION LIST

### PATENT DOCUMENT

- PTD 1:: Japanese Patent Laying-Open No. 2007-69733
- PTD 2:: Japanese Patent Laying-Open No. 2005-90862
- PTD 3:: Japanese Patent Laying-Open No. 2001-309506
- PTD 4:: Japanese Patent Laying-Open No. 2011-1048

### SUMMARY OF INVENTION

### TECHNICAL PROBLEM

For the purpose of practical use, a hybrid vehicle has been currently developed so as to allow selection of a driving state from a normal driving mode and a sport driving mode in which acceleration is prioritized. The sport driving mode is an operation mode in which hybrid equipment is operated in a highly loaded state, thereby increasing the driving force as compared with that in the normal driving mode, to improve the vehicle running performance. During the operation in the sport driving mode, the amount of heat generated from the hybrid equipment operated in the highly loaded state is increased. Accordingly, in order to prevent overheating of the hybrid equipment, it is required to develop a technique for temporarily improving the cooling performance for the hybrid equipment.

The present invention has been made in light of the above-described problems. A main object of the present invention is to provide a cooling device capable of achieving a cooling performance suitable for the amount of heat generated from a heat source. Another object of the present invention is to provide a method of controlling a cooling device for achieving a cooling performance suitable for the amount of heat generated from a heat source.

### SOLUTION TO PROBLEM

A cooling device according to the present invention is a cooling device cooling a heat source, and includes a compressor for circulating a coolant; a first heat exchanger performing heat exchange between the coolant and outside air; a decompressor decompressing the coolant; a second heat exchanger performing heat exchange between the coolant and air-conditioning air; a cooling unit provided on a route of the coolant flowing between the first heat exchanger and the decompressor, and cooling the heat source using the coolant; a bypass route bypassing the decompressor and the second heat exchanger; and a route selection unit selectively switching between a flow of the coolant flowing from the cooling unit toward the decompressor and a flow of the coolant flowing through the bypass route.

According to the above-described cooling device, preferably, the cooling device includes a temperature lowering unit lowering a temperature of the coolant. The temperature lowering unit lowers the temperature of the coolant flowing through the cooling unit when the route selection unit selects the flow of the coolant flowing through the bypass route. The cooling device may include an electronic expansion valve provided on a route of the coolant flowing between the first heat exchanger and the cooling unit.

According to the above-described cooling device, preferably, the cooling device includes a gas-liquid separator provided on a route of the coolant flowing between the second heat exchanger and the compressor. The coolant flowing from the cooling unit through the bypass route flows into the gas-liquid separator.

According to the above-described cooling device, preferably, the route selection unit selects the flow of the coolant flowing through the bypass route when an amount of generated heat by the heat source is increased.

According to the above-described cooling device, preferably, the cooling device includes a communication passage allowing communication between a route of the coolant flowing between the compressor and the first heat exchanger, and a route of the coolant flowing between the cooling unit and the decompressor.

According to the above-described cooling device, preferably, the route selection unit can form a flow of the coolant flowing from the cooling unit toward the communication passage.

A method of controlling a cooling device according to the present invention is a method of controlling a cooling device cooling a heat source. The cooling device includes a compressor for circulating a coolant, a first heat exchanger performing heat exchange between the coolant and outside air, a decompressor decompressing the coolant, a second heat exchanger performing heat exchange between the coolant and air-conditioning air, a cooling unit provided on a route of the coolant flowing between the first heat exchanger and the decompressor, and cooling the heat source using the coolant, a bypass route bypassing the decompressor and the second heat exchanger, and a route selection unit selectively switching between a flow of the coolant flowing from the cooling unit toward the decompressor and a flow of the coolant flowing through the bypass route. The above-described control method includes the steps of: determining an amount of generated heat by the heat source; and cooling the heat source by forming the flow of the coolant flowing through the bypass route when it is determined in the step of determining an amount of generated heat that the amount of generated heat is equal to or higher than a threshold value.

Preferably, the cooling device includes an electronic expansion valve provided on a route of the coolant flowing between the first heat exchanger and the cooling unit. In the step of cooling the heat source, an opening degree of the electronic expansion valve is decreased to cool the heat source.

Preferably, the above-described control method includes the steps of: determining an operation state of the compressor when it is determined in the step of determining an amount of generated heat that the amount of generated heat is equal to or higher than the threshold value; and starting the compressor when it is determined in the step of determining an operation state that the compressor is being stopped.

### ADVANTAGEOUS EFFECTS OF INVENTION

According to the cooling device of the present invention, it becomes possible to achieve a cooling performance suitable for the amount of heat generated from the heat source.

### BRIEF DESCRIPTION OF DRAWINGS

Fig. 1 is a schematic diagram showing the configuration of a cooling device according to the first embodiment.
Fig. 2 is a Mollier chart showing the state of a coolant in a vapor compression refrigeration cycle.
Fig. 3 is a schematic diagram showing the cooling device in the case where the required cooling performance for HV equipment is raised.
Fig. 4 is a schematic diagram showing the cooling device in the case where the required cooling performance for the HV equipment is raised while an air conditioner is stopped.
Fig. 5 is a Mollier chart showing the state of the coolant in the case where the required cooling performance for the HV equipment is raised.
Fig. 6 is a schematic diagram showing the configuration of a cooling device according to the second embodiment.
Fig. 7 is a diagram showing settings of a compressor and valves for each operation mode of the cooling device.
Fig. 8 is a schematic diagram showing the cooling device in the case where the vapor compression refrigeration cycle is stopped.
Fig. 9 is a schematic diagram showing the flow of the coolant cooling the HV equipment while the vapor compression refrigeration cycle is stopped.
Fig. 10 is a schematic diagram showing the cooling device in the case where the required cooling performance for the HV equipment is raised while the air conditioner is operated.
Fig. 11 is a schematic diagram showing the cooling device in the case where the required cooling performance for the HV equipment is raised while the air conditioner is stopped.
Fig. 12 is a block diagram showing details of the configuration of a control unit.
Fig. 13 is a flowchart illustrating an example of a method of controlling the cooling device.

### DESCRIPTION OF EMBODIMENTS

The embodiments of the present invention will be hereinafter described with reference to the accompanying drawings, in which the same or corresponding components are designated by the same reference characters, and description thereof will not be repeated.

### (First Embodiment)

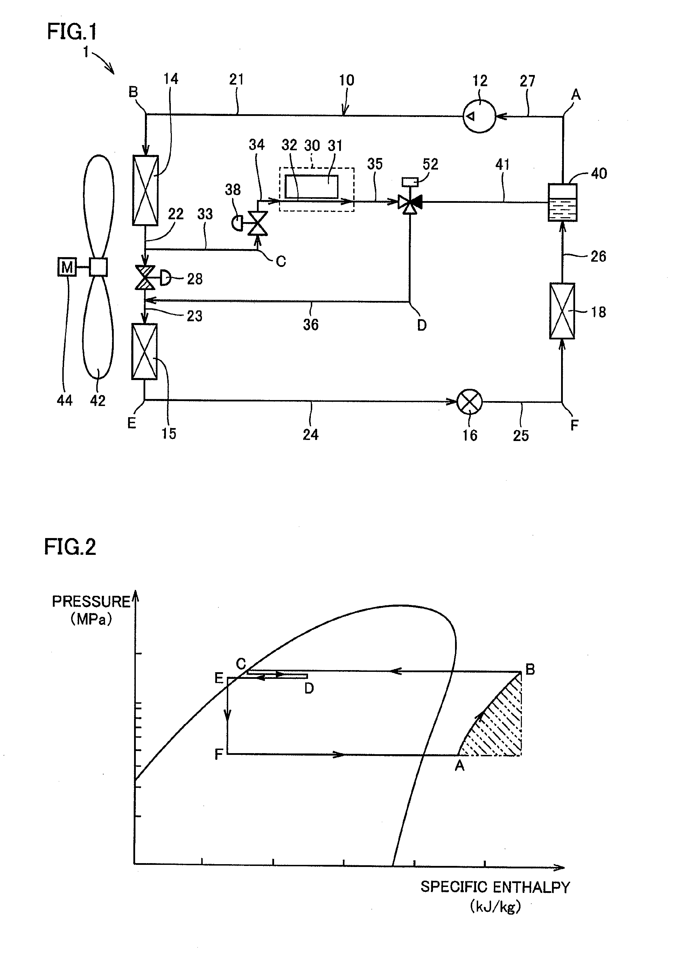

Fig. 1 is a schematic diagram showing the configuration of a cooling device 1 according to the first embodiment. As shown in Fig. 1, cooling device 1 includes a vapor compression refrigeration cycle 10. Vapor compression refrigeration cycle 10 is mounted on a vehicle, for example, to perform cooling in a vehicle cabin. The cooling with use of vapor compression refrigeration cycle 10 is performed, for example, when a switch for performing cooling is turned on, or when an automatic control mode for automatically adjusting the temperature in the vehicle cabin at a set temperature is selected and the temperature in the vehicle cabin is higher than the set temperature.

Vapor compression refrigeration cycle 10 includes a compressor 12, a heat exchanger 14 as the first heat exchanger, a heat exchanger 15, an expansion valve 16 as an example of a decompressor, and a heat exchanger 18 as the second heat exchanger. Vapor compression refrigeration cycle 10 also includes a gas-liquid separator 40 arranged on the route of the coolant between heat exchanger 18 and compressor 12.

Compressor 12 is operated by a motor or an engine mounted on a vehicle as a power source and adiabatically compresses the coolant gas to obtain superheated coolant gas. Compressor 12 takes in and compresses a coolant flowing from heat exchanger 18 during operation of vapor compression refrigeration cycle 10, and then discharges a high-temperature and high-pressure gas-phase coolant to coolant passage 21. Compressor 12 discharges the coolant to coolant passage 21 to allow circulation of the coolant through vapor compression refrigeration cycle 10.

Heat exchangers 14 and 15 allow superheated coolant gas compressed by compressor 12 to radiate heat isobarically to an external medium to obtain coolant liquid. The high-pressure gas-phase coolant discharged from compressor 12 is condensed (liquefied) by radiating heat to a periphery of heat exchangers 14 and 15 for cooling. Heat exchangers 14 and 15 each include a tube through which the coolant flows, and a fin for performing heat exchange between the coolant flowing through the tube and air around heat exchangers 14 and 15.

Heat exchangers 14 and 15 perform heat exchange between cooling air and the coolant. The cooling air may be supplied to heat exchangers 14 and 15 by natural draft generated by vehicle running. Alternatively, the cooling air may be supplied to heat exchangers 14 and 15 by forced draft from a cooling fan such as a condenser fan 42 or a radiator fan for cooling the engine. Condenser fan 42 rotates with the driving force received from motor 44 to generate airflow and supply cooling air to heat exchangers 14 and 15. The heat exchange performed in heat exchangers 14 and 15 lowers the temperature of the coolant to liquefy the coolant.

Expansion valve 16 allows the high-pressure liquid-phase coolant flowing through coolant passage 25 to be sprayed from a small pore for expansion to achieve a low-temperature, low-pressure mist-like coolant. Expansion valve 16 decompresses the coolant liquid condensed by heat exchangers 14 and 15 to obtain moist vapor in a gas-liquid mixed state. In addition, the decompressor for decompressing coolant liquid is not limited to expansion valve 16 performing throttle expansion, but may be a capillary tube.

By evaporation of the mist-like coolant flowing through heat exchanger 18, this heat exchanger 18 absorbs heat of ambient air introduced so as to come in contact with heat exchanger 18. Heat exchanger 18 uses the coolant decompressed by expansion valve 16 to absorb heat of evaporation, caused when the moist vapor of the coolant is evaporated to become coolant gas, from the air-conditioning air flowing into the vehicle cabin, so that the vehicle cabin is cooled. The air-conditioning air with a temperature lowered due to absorption of heat by heat exchanger 18 is returned again into the vehicle cabin, so that the vehicle cabin is cooled. In heat exchanger 18, the coolant absorbs heat from its surroundings and is then heated.

Heat exchanger 18 includes a tube through which the coolant flows, and a fin for heat exchange between the coolant flowing through the tube and the ambient air of heat exchanger 18. The coolant in the state of moist vapor flows through the tube. When flowing through the tube, the coolant is evaporated by absorbing heat of the air-conditioning air via the fin as latent heat of evaporation, and then turned into superheated vapor by sensible heat. The evaporated coolant flows into compressor 12 via coolant passage 27. Compressor 12 compresses the coolant flowing from heat exchanger 18.

Vapor compression refrigeration cycle 10 further includes a coolant passage 21 allowing communication between compressor 12 and heat exchanger 14, coolant passages 22 and 23 allowing communication between heat exchanger 14 and heat exchanger 15, a coolant passage 24 allowing communication between heat exchanger 15 and expansion valve 16, a coolant passage 25 allowing communication between expansion valve 16 and heat exchanger 18, a coolant passage 26 allowing communication between heat exchanger 18 and gas-liquid separator 40, and a coolant passage 27 allowing communication between gas-liquid separator 40 and compressor 12.

Coolant passage 21 is a passage for causing the coolant to flow from compressor 12 to heat exchanger 14. The coolant flows between compressor 12 and heat exchanger 14 from an outlet of compressor 12 toward an inlet of heat exchanger 14 via coolant passage 21. Coolant passages 22 to 24 each are a passage for causing the coolant to flow from heat exchanger 14 to expansion valve 16. The coolant flows between heat exchanger 14 and expansion valve 16 from an outlet of heat exchanger 14 toward an inlet of expansion valve 16 via coolant passages 22 to 24.

Coolant passage 25 is a passage for causing the coolant to flow from expansion valve 16 to heat exchanger 18. The coolant flows between expansion valve 16 and heat exchanger 18 from an outlet of expansion valve 16 to the inlet of heat exchanger 18 via coolant passage 25. Coolant passages 26 and 27 each are a passage for causing the coolant to flow from heat exchanger 18 to compressor 12. The coolant flows between heat exchanger 18 and compressor 12 from the outlet of heat exchanger 18 to an inlet of compressor 12 via coolant passages 26 and 27.

Vapor compression refrigeration cycle 10 is configured by compressor 12, heat exchangers 14 and 15, expansion valve 16, and heat exchanger 18 coupled via coolant passages 21 to 27. In addition, the coolant used for vapor compression refrigeration cycle 10 may be carbon dioxide, hydrocarbon such as propane and isobutane, ammonia, fluorocarbons, water or the like, for example.

The route through which the coolant flows from the outlet of heat exchanger 14 toward the inlet of expansion valve 16 includes a coolant passage 22 extending from the outlet side of heat exchanger 14 to a flow rate regulating valve 28 described later, a coolant passage 23 coupled to the inlet side of heat exchanger 15, and a coolant passage 24 through which the coolant flows from the outlet side of heat exchanger 15 to expansion valve 16.

The route of the coolant flowing between heat exchanger 14 and heat exchangers 15 further includes a coolant passage 33 branching from coolant passage 22 and extending to an electronic expansion valve 38 described later, a coolant passage 34 allowing communication between electronic expansion valve 38 and cooling unit 30, a coolant passage 35 allowing communication between cooling unit 30 and a switching valve 52 described later, and a coolant passage 36 allowing communication between switching valve 52 and coolant passage 23. The coolant liquid flows from heat exchanger 14 through coolant passages 33 and 34 into cooling unit 30. The coolant having passed through cooling unit 30 flows through coolant passages 35 and 36, and back to coolant passage 23. Cooling unit 30 is provided on the route of the coolant that flows from heat exchanger 14 toward heat exchanger 15.

Cooling device 1 includes a coolant route arranged in parallel with coolant passages 22 and 23 between heat exchangers 14 and 15, and cooling unit 30 is disposed on this coolant route. Cooling unit 30 is provided on one of a plurality of passages connected in parallel in the route of the coolant flowing between heat exchanger 14 and heat exchanger 15. Cooling unit 30 includes HV (Hybrid Vehicle) equipment 31 that is electrical equipment mounted in a vehicle, and a cooling passage 32 serving as a pipe line through which the coolant flows. HV equipment 31 is an example of a heat source. Cooling passage 32 has one end connected to coolant passage 34, and the other end connected to coolant passage 35.

The coolant route connected in parallel with coolant passages 22 and 23 includes coolant passages 33 and 34 on the upstream side of cooling unit 30 (on the side close to heat exchanger 14), cooling passage 32 included in cooling unit 30, and coolant passages 35 and 36 on the downstream side of cooling unit 30 (on the side close to heat exchanger 15). Coolant passages 33 and 34 each are a passage branching from coolant passage 22 and through which the liquid-phase coolant flows from heat exchanger 14 to cooling unit 30. Coolant passages 35 and 36 each are a passage through which the coolant is returned from cooling unit 30 to coolant passage 23 and flows to heat exchanger 15.

The coolant liquid flowing out of heat exchanger 14 flows through coolant passages 22, 33 and 34 toward cooling unit 30. The coolant flowing to cooling unit 30 and flowing through cooling passage 32 absorbs heat from HV equipment 31 as a heat source, to cool HV equipment 31. Cooling unit 30 cools HV equipment 31 using the liquid-phase coolant that is condensed in heat exchanger 14 and flows through cooling passage 32. In cooling unit 30, heat exchange is performed between the coolant flowing through cooling passage 32 and HV equipment 31, thereby cooling HV equipment 31 and heating the coolant. The coolant further flows from cooling unit 30 through coolant passages 35 and 36 and reaches heat exchanger 15 through coolant passage 23.

Cooling unit 30 is provided so as to have a structure that allows heat exchange between HV equipment 31 and the coolant to be performed in cooling passage 32. In the present embodiment, cooling unit 30 includes a cooling passage 32 that is, for example, formed to have an outer peripheral surface coming in direct contact with the housing ofHV equipment 31. Cooling passage 32 has a portion that is adjacent to the housing of HV equipment 31. In this portion, it becomes possible to perform heat exchange between the coolant flowing through cooling passage 32 and HV equipment 31.

HV equipment 31 is directly connected to an outer peripheral surface of cooling passage 32 forming a part of the coolant route extending from heat exchanger 14 to head exchanger 15 in vapor compression refrigeration cycle 10. Thus, HV equipment 31 is cooled. Since HV equipment 31 is arranged on the outside of cooling passage 32, HV equipment 31 does not interfere with the flow of the coolant flowing through cooling passage 32. Therefore, since the pressure loss of vapor compression refrigeration cycle 10 does not increase, HV equipment 31 can be cooled without increasing the motive power of compressor 12.

Alternatively, cooling unit 30 may include an optional known heat pipe arranged between HV equipment 31 and cooling passage 32. In this case, HV equipment 31 is connected to the outer peripheral surface of cooling passage 32 via the heat pipe. This HV equipment 31 is cooled by heat transfer from HV equipment 31 through the heat pipe to cooling passage 32. HV equipment 31 is used as a heating unit of the heat pipe and cooling passage 32 is used as a cooling unit of the heat pipe, thereby raising the heat transfer efficiency between cooling passage 32 and HV equipment 31. Consequently, the cooling efficiency for HV equipment 31 can be improved. For example, a wick-type heat pipe can be used.

Since the heat pipe can reliably transfer heat from HV equipment 31 to cooling passage 32, HV equipment 31 and cooling passage 32 may be spaced apart from each other, and cooling passage 32 does not have to be arranged in a complicated manner for bringing cooling passage 32 into contact with HV equipment 31. Consequently, the degree of freedom in arrangement of HV equipment 31 can be improved.

HV equipment 31 includes electric equipment generating heat by supply and reception of electric power. The electric equipment includes, for example, at least any one of an inverter for converting direct-current (DC) power to alternate-current (AC) power, a motor generator as a rotating electric machine, a battery as a power storage device, a boost converter for boosting the voltage of the battery, a DC/DC converter for stepping down the voltage of the battery, and the like. The battery is a secondary battery such as a lithium ion battery or a nickel-metal hydride battery. In place of the battery, a capacitor may be employed.

The coolant passes through a coolant circulating flow passage including compressor 12, heat exchangers 14 and 15, expansion valve 16, and heat exchanger 18 sequentially connected by coolant passages 21 to 27, and circulates through vapor compression refrigeration cycle 10. The coolant flows through vapor compression refrigeration cycle 10 so as to sequentially pass through the points A, B, C, D, E, and F shown in Fig. 1. Thus, the coolant circulates through compressor 12, heat exchangers 14 and 15, expansion valve 16, and heat exchanger 18.

Fig. 2 is a Mollier chart showing the state of the coolant in vapor compression refrigeration cycle 10. In Fig. 2, the horizontal axis denotes a specific enthalpy of the coolant while the vertical axis denotes an absolute pressure of the coolant. The unit of the specific enthalpy is kJ/kg and the unit of the absolute pressure is MPa. The curve shown in the figure is a saturated vapor line and a saturated liquid line of the coolant.

Fig. 2 represents a thermal dynamic state of the coolant at each point (that is, points A, B, C, D, E and F) in vapor compression refrigeration cycle 10 that flows from coolant passage 22 at the outlet of heat exchanger 14 into cooing unit 30 via coolant passages 33 and 34, cools HV equipment 31, and returns from cooling unit 30 through coolant passages 35 and 36 to coolant passage 23 at the inlet of heat exchanger 15.

As shown in Fig. 2, the coolant in the superheated vapor state taken into compressor 12 (point A) is adiabatically compressed along an isentropic line in compressor 12. As the compression progresses, the coolant rises in pressure and temperature, and turns into high-temperature and high-pressure superheated vapor with a high degree of superheat (point B). The area of the region shaded by dashed-two dotted lines in Fig. 2 shows the motive power of compressor 12 required for adiabatically compressing the coolant from point A to point B.

The high-temperature and high-pressure coolant in the superheated vapor state that has been adiabatically compressed in compressor 12 flows into heat exchanger 14, where this coolant is cooled. The gas-phase coolant discharged from compressor 12 radiates heat into the ambient environment in heat exchanger 14, thereby being cooled and then condensed (liquefied). By heat exchange with the outside air in heat exchanger 14, the coolant is lowered in temperature and liquefied. The high-pressure coolant vapor having entered into heat exchanger 14 turns into dry saturated vapor from superheated vapor while maintaining equal pressure in heat exchanger 14, radiates latent heat of condensation and is gradually liquefied, and turns into moist vapor in the gas-liquid mixed state. Then, all the coolant condenses into saturated liquid (point C).

The coolant in the saturated liquid state flowing out of heat exchanger 14 flows through coolant passages 22, 33 and 34 into cooling passage 32 of cooling unit 30, to cool HV equipment 31. In cooling unit 30, heat is radiated into the liquid coolant that has passed through heat exchanger 14 and turned into a condensed saturated liquid state, thereby cooling HV equipment 31. By heat exchange with HV equipment 31, the coolant is heated to increase the dryness of the coolant. The coolant receives latent heat from HV equipment 31 and partially evaporates, thereby turning into moist vapor in a gas-liquid two-phase state formed of a mixture of saturated liquid and saturated vapor (point D).

Then, the coolant flows into heat exchanger 15 through coolant passages 35, 36 and 23. The moist vapor of the coolant is cooled by heat exchange with outside air in heat exchanger 15 and thereby again condensed. When all the coolant is condensed, it turns into saturated liquid, and turns into supercooled liquid (point E) which has been supercooled by radiating sensible heat. Then, the coolant flows into expansion valve 16 through coolant passage 24. At expansion valve 16, the coolant in the supercooled liquid state is subjected to throttle expansion, and the temperature and pressure are lowered without a change in a specific enthalpy, so that low-temperature and low-pressure moist vapor in the gas-liquid mixed state is obtained (point F).

The coolant in the moist vapor state flowing out of expansion valve 16 flows into heat exchanger 18 through coolant passage 25. The coolant in the moist vapor state flows into the tube of heat exchanger 18. When flowing through the tube of heat exchanger 18, the coolant absorbs heat of the air-conditioning air as latent heat of evaporation via the fin, thereby being evaporated while maintaining the equal pressure. Heat exchanger 18 is disposed within a duct through which the air-conditioning air flows, and performs heat exchange between the coolant and the air-conditioning air to adjust the temperature of the air-conditioning air. The air-conditioning air may be outside air, or may be air within the vehicle cabin. During the cooling operation, the air-conditioning air is cooled in heat exchanger 18, and the coolant is heated by heat transferred from the air-conditioning air.

When all the coolant turns into dry saturated vapor, the coolant vapor is further raised in temperature by sensible heat and turns into superheated vapor (point A). After that, the coolant is sucked into compressor 12 through coolant passages 26 and 27. Compressor 12 compresses the coolant flowing from heat exchanger 18.

In accordance with such a cycle, the coolant continuously repeats the state changes of compression, condensation, throttle expansion, and evaporation. In the description of the vapor compression refrigeration cycle set forth above, the theoretical refrigeration cycle is described. However, in actual vapor compression refrigeration cycle 10, loss in compressor 12, and pressure loss and heat loss in the coolant should be taken into consideration.

During the operation of vapor compression refrigeration cycle 10, the coolant absorbs heat of evaporation from the air in the vehicle cabin when it evaporates in heat exchanger 18 acting as an evaporator. Thereby, this coolant cools the vehicle cabin. In addition, the high-pressure liquid coolant, which has flowed out of heat exchanger 14, flows into cooling unit 30 and subjected to heat exchange with HV equipment 31, thereby cooling HV equipment 31. Utilizing vapor compression refrigeration cycle 10 for air conditioning in the vehicle cabin, cooling device 1 cools HV equipment 31 serving as a heat source mounted in the vehicle. It is desirable that the temperature required for cooling HV equipment 31 is at least lower than the upper limit value of the target temperature range as a temperature range of HV equipment 31.

Since HV equipment 31 is cooled utilizing vapor compression refrigeration cycle 10 provided for cooling a portion to be cooled in heat exchanger 18, there is no need to provide devices such as a dedicated water circulating pump or cooling fan for cooling HV equipment 31. Accordingly, since the configuration required for cooling device 1 of HV equipment 31 can be reduced and the device configuration can be simplified, the production cost for cooling device 1 can be reduced. In addition, since there is no need to operate a power source such as a pump and a cooling fan for cooling HV equipment 31, the power consumption for operating the power source is not required. Therefore, the power consumption for cooling HV equipment 31 can be reduced.

In heat exchanger 14, the coolant only has to be cooled to the state of saturated liquid. In this case, the coolant in the saturated liquid state is supplied to cooling unit 30. The coolant in the moist vapor state that has received latent heat of evaporation from HV equipment 31 and partially evaporated is cooled again in heat exchanger 15. The state of the coolant is changed at a constant temperature until the coolant in the moist vapor state is condensed and completely turned into saturated liquid. Heat exchanger 15 further supercools the liquid-phase coolant to the supercool degree required for cooling the vehicle cabin. Since the supercool degree of the coolant does not need to be excessively raised, the volumes of heat exchangers 14 and 15 can be decreased. Therefore, the cooling ability for the vehicle cabin can be ensured, and heat exchangers 14 and 15 can be reduced in size, so that cooling device 1 that is reduced in size and advantageous for vehicle installation can be achieved.

As a route through which the coolant flows from heat exchanger 14 toward expansion valve 16, coolant passages 22 and 23 not extending through cooling unit 30, and coolant passages 33, 34, 35, and 36 and cooling passage 32 each serving as a route of the coolant flowing through cooling unit 30 to cool HV equipment 31 are arranged in parallel. The cooling system ofHV equipment 31 including coolant passages 33 to 36 is connected in parallel with coolant passages 22 and 23. Accordingly, only a part of the coolant flowing out of heat exchanger 14 flows into cooling unit 30. The amount of the coolant required for cooling HV equipment 31 flows through cooling unit 30, and HV equipment 31 is appropriately cooled. Therefore, HV equipment 31 can be prevented from being supercooled.

The route of the coolant flowing from heat exchanger 14 into heat exchanger 15 without flowing through cooling unit 30 and the route of the coolant flowing from heat exchanger 14 through cooling unit 30 into heat exchanger 15 are arranged in parallel, and only a part of the coolant flows through coolant passages 33 to 36, thereby allowing reduction in pressure loss caused when the coolant flows through the cooling system ofHV equipment 31. Since all the coolant does not flow into cooling unit 30, it becomes possible to reduce the pressure loss associated with the coolant flowing through cooling unit 30. Accordingly, it becomes possible to reduce the power consumption required for operating compressor 12 for circulating the coolant.

When the low-temperature and low-pressure coolant having passed through expansion valve 16 is used for cooling HV equipment 31, the ability of heat exchanger 18 to cool the air in the vehicle cabin is decreased, thereby lowering the ability to cool the vehicle cabin. In contrast, according to cooling device 1 in the present embodiment, in vapor compression refrigeration cycle 10, the high-pressure coolant discharged from compressor 12 is condensed by both of heat exchanger 14 as the first condenser and heat exchanger 15 as the second condenser. Two heat exchangers 14 and 15 are arranged between compressor 12 and expansion valve 16. Cooling unit 30 cooling HV equipment 31 is disposed between heat exchanger 14 and heat exchanger 15. Heat exchanger 15 is disposed on the route of the coolant flowing from cooling unit 30 toward expansion valve 16.

The coolant heated by latent heat of evaporation received from HV equipment 31 is sufficiently cooled in heat exchanger 15, so that the coolant has a temperature and pressure at the outlet of expansion valve 16 that are essentially required for cooling the vehicle cabin. Accordingly, since it becomes possible to sufficiently increase the amount of heat received from outside when the coolant evaporates in heat exchanger 18, the air-conditioning air passing through heat exchanger 18 can be sufficiently cooled. In this way, by setting the heat radiation ability of heat exchanger 15 allowing sufficient cooling of the coolant, HV equipment 31 can be cooled without exerting an influence upon the ability to cool the air in the vehicle cabin. Therefore, both of the cooling ability for HV equipment 31 and the cooling ability for the vehicle cabin can be reliably ensured.

When cooling HV equipment 31, the coolant flowing from heat exchanger 14 into cooling unit 30 receives heat from HV equipment 31 and is then heated. When the coolant is heated in cooling unit 30 to a temperature equal to or higher than the saturated vapor temperature and the total amount of the coolant evaporates, the amount of heat exchange between the coolant and HV equipment 31 is decreased, thereby preventing efficient cooling of HV equipment 31 and also increasing the pressure loss caused when the coolant flows through a pipe line. Accordingly, it is desirable to sufficiently cool the coolant in heat exchanger 14 to such an extent that the total amount of the coolant does not evaporate after HV equipment 31 is cooled.

Specifically, the state of the coolant at the outlet of heat exchanger 14 is brought closer to saturated liquid, and typically, the coolant is brought into the state on the saturated liquid line at the outlet of heat exchanger 14. As a result of allowing heat exchanger 14 to have an ability to sufficiently cool the coolant, the heat radiating ability of heat exchanger 14 to radiate heat from the coolant becomes higher than the heat radiating ability of heat exchanger 15. By sufficiently cooing the coolant in heat exchanger 14 having a relatively greater heat radiating ability, the coolant having received heat from HV equipment 31 can be maintained in the state of moist vapor, so that the reduction in the amount of heat exchange between the coolant and HV equipment 31 can be avoided. Therefore, HV equipment 31 can be cooled in a fully efficient manner. The coolant in the moist vapor state that has cooled HV equipment 31 is efficiently cooled again in heat exchanger 15, and cooled to the state of supercooled liquid to an extent below the saturated temperature. Therefore, cooling device 1 can be provided that can ensure both of the cooling ability for the vehicle cabin and the cooling ability for HV equipment 31.

Referring back to Fig. 1, cooling device 1 includes flow rate regulating valve 28. Flow rate regulating valve 28 is connected to coolant passages 22 and 23 forming one passage not extending through cooling unit 30 among the coolant passages connected in parallel and extending from heat exchanger 14 toward expansion valve 16. Flow rate regulating valve 28 changes its valve opening degree to increase or decrease the pressure loss of the coolant flowing from coolant passage 22 through flow rate regulating valve 28 into coolant passage 23. Thereby, flow rate regulating valve 28 arbitrarily adjusts the flow rate of the coolant directly flowing from coolant passage 22 into coolant passage 23 and the flow rate of the coolant flowing through the cooling system of HV equipment 31 including cooling passage 32.

For example, when flow rate regulating valve 28 is fully closed to set its valve opening degree at 0%, the total amount of the coolant flowing out of heat exchanger 14 flows through coolant passages 33 and 34 into cooling unit 30. If the valve opening degree of flow rate regulating valve 28 is increased, the coolant flowing from heat exchanger 14 into coolant passage 22 is to include a coolant increased in flow rate that flows through coolant passages 22 and 23 directly into heat exchanger 15, and a coolant decreased in flow rate that flows through coolant passages 33 and 34 into cooling passage 32 to cool HV equipment 31. If the valve opening degree of flow rate regulating valve 28 is decreased, the coolant flowing from heat exchanger 14 into coolant passage 22 is to include a coolant decreased in flow rate that flows through coolant passages 22 and 23 directly into heat exchanger 15, and a coolant increased in flow rate that flows through coolant passages 33 and 34 to cool HV equipment 31.

When the valve opening degree of flow rate regulating valve 28 is increased, the flow rate of the coolant cooling HV equipment 31 is decreased, thereby decreasing the cooling ability for HV equipment 31. When the valve opening degree of flow rate regulating valve 28 is decreased, the flow rate of the coolant cooling HV equipment 31 is increased, thereby improving the cooling ability for HV equipment 31. Since the amount of the coolant flowing through HV equipment 31 can be optimally adjusted by using flow rate regulating valve 28, supercooling of HV equipment 31 can be reliably prevented. In addition, both of the pressure loss associated with the coolant flowing through the cooling system ofHV equipment 31 and the power consumption of compressor 12 for circulating the coolant can be reliably decreased.

Cooling device 1 includes an electronic expansion valve 38 connected to coolant passages 33 and 34 on the upstream side with respect to cooling unit 30. Electronic expansion valve 38 is provided in the route of the coolant between heat exchanger 14 and cooling unit 30. Electronic expansion valve 38 is provided such that the opening degree can be adjusted in an electrically-powered manner. Electronic expansion valve 38 may be a valve whose valve opening degree is changed in accordance with the rotation amount of a rotor disposed within the valve and rotating in response to an instruction for the valve opening degree. Electronic expansion valve 38 is configured to minimize the pressure loss of the coolant flowing through electronic expansion valve 38 when it is fully opened (the opening degree is 100%), and also to decrease the temperature and the pressure of the coolant by subjecting the coolant to throttle expansion by decreasing its opening degree.

When electronic expansion valve 38 is fully opened, the coolant flowing through coolant passage 33 and the coolant flowing through coolant passage 34 are approximately equal in temperature and pressure. On the other hand, when the opening degree of electronic expansion valve 38 is decreased, the coolant is subjected to throttle expansion in electronic expansion valve 38. In this case, the specific enthalpy of the coolant does not change, but the temperature and the pressure are lowered. Accordingly, the coolant flowing through coolant passage 34 becomes lower in temperature and pressure than the coolant flowing through coolant passage 33. By arbitrarily adjusting the opening degree of electronic expansion valve 38, the temperature and the pressure of the coolant supplied to cooling unit 30 through coolant passage 34 can be adjusted, so that the coolant under the optimal conditions for cooling HV equipment 31 can be supplied to cooling unit 30.

Cooling device 1 further includes a switching valve 52 switching the communication state between coolant passages 35 and 36. Switching valve 52 is provided as a three-way valve having pipe connection ports at three positions. Coolant passage 35 is connected to the first pipe connection port of switching valve 52. Coolant passage 36 is connected to the second pipe connection port of switching valve 52. A bypass route 41 is connected to the third pipe connection port of switching valve 52. Bypass route 41 connects switching valve 52 and the route of the coolant extending between heat exchanger 18 and compressor 12. Typically, bypass route 41 has one end connected to switching valve 52, and the other end connected to gas-liquid separator 40 disposed between heat exchanger 18 and compressor 12.

Switching valve 52 is switched to be opened or closed, thereby switching between the flow of the coolant flowing from coolant passage 35 toward coolant passage 36 and the flow of the coolant flowing from coolant passage 35 toward bypass route 41. Switching valve 52 has a function as a route selection unit that selectively switches between the flow of the coolant flowing from cooling unit 30 through heat exchanger 15 toward expansion valve 16 and the flow of the coolant flowing out of cooling unit 30 through bypass route 41 into gas-liquid separator 40. By switching the coolant route using switching valve 52, the coolant having cooled HV equipment 31 can be caused to flow through the route arbitrarily selected from a route extending through coolant passages 36 and 23 to heat exchanger 15 and a route extending through bypass route 41 to gas-liquid separator 40 on the upstream side of compressor 12.

Fig. 1 shows the case where the air conditioner for cooling the vehicle cabin is being operated and also the case where normal cooling for HV equipment 31 is required. In this case, compressor 12 is in the operated state in order to circulate the coolant through the entire vapor compression refrigeration cycle 10. The valve opening degree of flow rate regulating valve 28 is adjusted such that a sufficient coolant for cooling HV equipment 31 flow into cooling unit 30. Electronic expansion valve 38 is fully opened. Switching valve 52 is switched to be opened and closed so as to allow communication between coolant passage 35 and coolant passage 36, and to disallow bypass route 41 to be in communication with both of coolant passages 35 and 36. Switching valve 52 is operated so as to cause the coolant to flow from cooling unit 30 through heat exchanger 15 to expansion valve 16, and the coolant route is selected such that the coolant flows through the entire cooling device 1.

The coolant is circulated through vapor compression refrigeration cycle 10. Then, the low-temperature and low-pressure coolant that has been turned into mist by expansion valve 16 is supplied to heat exchanger 18, thereby allowing cooling of the air-conditioning air. Accordingly, the ability to cool the vehicle cabin can be ensured. In addition, since heat is taken from HV equipment 31 by the latent heat of evaporation of the coolant flowing from heat exchanger 14 into cooling unit 30, HV equipment 31 can be efficiently cooled.

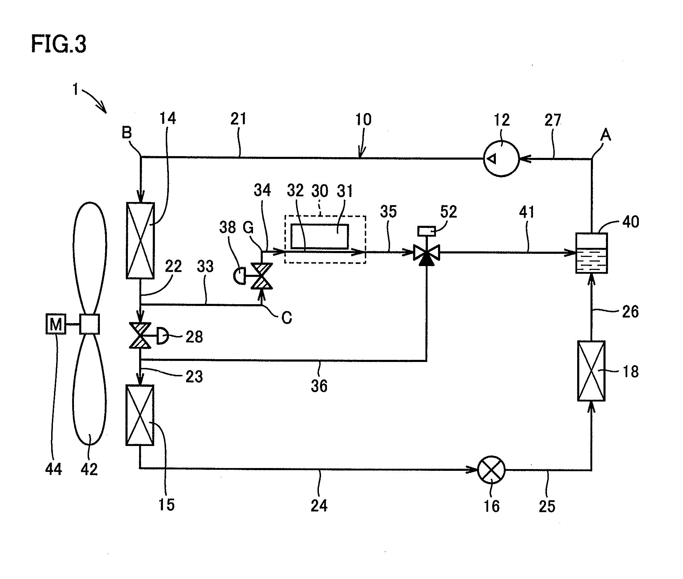

Fig. 3 is a schematic diagram showing cooling device 1 in the case where the required cooling performance for HV equipment 31 is raised. Fig. 3 shows the case where the air conditioner for cooling the vehicle cabin is being operated, and also the case where improvement in cooling performance for HV equipment 31 is required because the heat amount generated from HV equipment 31 is increased, such as the case where the driver operating the vehicle selects a sport driving mode and HV equipment 31 is operated in a highly loaded state, for example. In this case, as in the state shown in Fig. 1, compressor 12 is in an operated state and the opening degree of flow rate regulating valve 28 is adjusted. On the other hand, electronic expansion valve 38 is narrowed such that its opening degree is decreased. Switching valve 52 is switched to be opened or closed so as to allow communication between coolant passage 35 and bypass route 41, and to disallow coolant passage 36 to be in communication with both of coolant passage 35 and bypass route 41.

In this case, the coolant flowing through cooling unit 30 and used for cooling HV equipment 31 flows through switching valve 52 into bypass route 41, and flows into gas-liquid separator 40 on the upstream side of compressor 12. Bypass route 41 is directly connected to switching valve 52 and gas-liquid separator 40. The coolant for cooling HV equipment 31 flows through the route extending from cooling unit 30 through gas-liquid separator 40 into compressor 12, but does not flow into heat exchanger 15, expansion valve 16 and heat exchanger 18. Bypass route 41 is provided as a coolant route that bypasses heat exchanger 15, expansion valve 16 and heat exchanger 18.

In this case, the sport driving mode is a vehicle driving mode aiming at temporarily improving the vehicle running performance. In the case of a hybrid vehicle, control is performed to supply a large current to a drive motor, to temporarily boost the voltage supplied to the drive motor, thereby allowing improvement in the output from the drive motor. For example, the vehicle running performance can be improved by temporarily applying a high voltage of 650V to the motor rated at 500V.

By setting the vehicle in the sport driving mode, the vehicle running performance can be improved without changing the specifications of HV equipment 31 and at no additional cost. The user who operates the vehicle can feel the driving operation in the mode prioritizing vehicle running, while driving the same vehicle, by a simple operation of switching the driving mode. Meanwhile, in order to apply a high voltage equal to or higher than the rating voltage to the motor, HV equipment 31 is to be operated in the overloaded state, with the result that the amount of generated heat from HV equipment 31 is increased as compared with that in the normal driving mode. Accordingly, in the sport driving mode, it is necessary to maintain the temperature of HV equipment 31 within an acceptable range to avoid overheating of HV equipment 31. Therefore, the ability to cool HV equipment 31 needs to be improved.

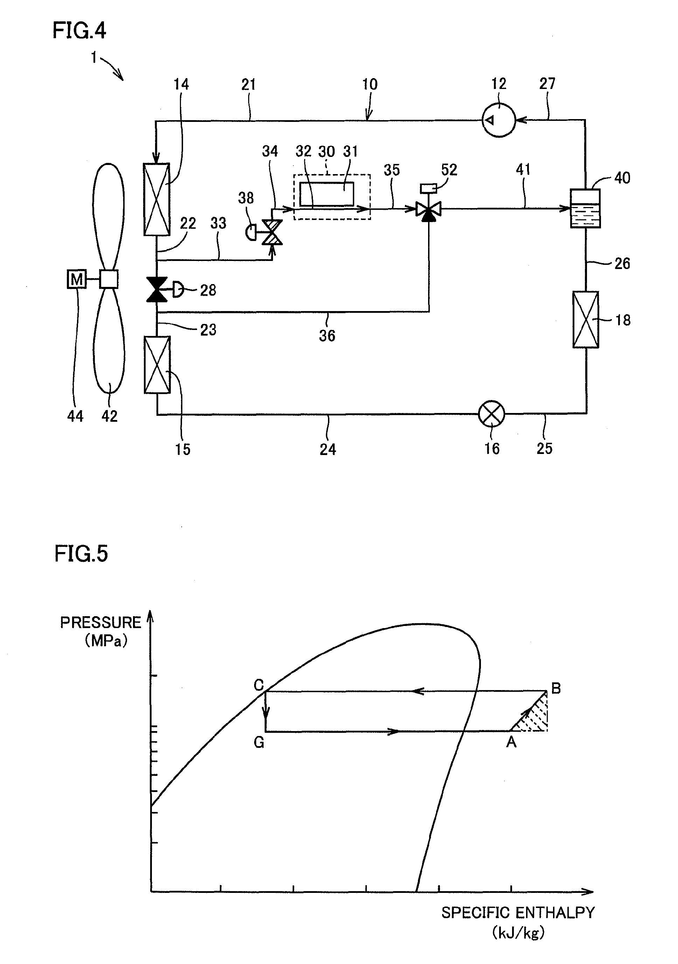

Fig. 4 is a schematic diagram showing cooling device 1 in the case where the required cooling performance for HV equipment 31 is raised while an air conditioner is stopped. Fig. 4 shows the case where an air conditioner is being stopped and the case where improvement in cooling performance for HV equipment 31 is required because the heat amount generated from HV equipment 31 is increased. In this case, flow rate regulating valve 28 is fully closed (the opening degree is 0%). Electronic expansion valve 38 is narrowed such that its opening degree is decreased. Switching valve 52 is switched to be opened or closed so as to allow communication between coolant passage 35 and bypass route 41, and disallow coolant passage 36 to be in communication with both of coolant passage 35 and bypass route 41.

Compressor 12 is set in the operated state in order to provide driving force for allowing the coolant flowing through bypass route 41 to circulate through the refrigeration cycle. Compressor 12 is forcibly started while the air conditioner is stopped, thereby producing a flow of the coolant flowing through a circulation route including cooling unit 30 to cool HV equipment 31. The coolant flowing through cooling unit 30 flows through switching valve 52 into bypass route 41, and further into gas-liquid separator 40.

Fig. 5 is a Mollier chart showing the state of the coolant in the case where the required cooling performance for HV equipment 31 is raised. In Fig. 5, the horizontal axis denotes a specific enthalpy of the coolant while the vertical axis denotes an absolute pressure of the coolant. The unit of the specific enthalpy is kJ/kg and the unit of the absolute pressure is MPa. The curve shown in the figure is a saturated vapor line and a saturated liquid line of the coolant.

As shown in Figs. 3 and 4, for improving the required cooling performance for HV equipment 31, a coolant circulation route is formed that extends sequentially through compressor 12, heat exchanger 14, electronic expansion valve 38, and cooling unit 30. The coolant used for cooling HV equipment 31 circulates through this coolant circulation route. The coolant flows through vapor compression refrigeration cycle 10 so as to sequentially pass through points A, B, C, and G shown in Fig. 3. Thus, the coolant circulates through compressor 12, heat exchanger 14, electronic expansion valve 38, and cooling unit 30. Fig. 5 represents a thermal dynamic state of the coolant at each point (that is, points A, B, C, and G) in vapor compression refrigeration cycle 10 that flows from coolant passage 22 at the outlet of heat exchanger 14 into cooling unit 30 via coolant passages 33 and 34, cools HV equipment 31, and returns from cooling unit 30 through coolant passage 35 and bypass route 41 to the upstream side of compressor 12.

As shown in Fig. 5, the coolant in the superheated vapor state taken into compressor 12 (point A) is adiabatically compressed along an isentropic line in compressor 12. As the compression progresses, the coolant rises in pressure and temperature, and turns into high-temperature and high-pressure superheated vapor with a high degree of superheat (point B). The area of the region shaded by dashed-two dotted lines in Fig. 5 shows the motive power of compressor 12 required for adiabatically compressing the coolant from point A to point B.

The high-temperature and high-pressure coolant in the superheated vapor state that has been adiabatically compressed in compressor 12 flows into heat exchanger 14, where this coolant is cooled. The gas-phase coolant discharged from compressor 12 radiates heat into the ambient environment in heat exchanger 14, thereby being cooled and then condensed (liquefied). By heat exchange with the outside air in heat exchanger 14, the coolant is lowered in temperature and liquefied. The high-pressure coolant vapor having entered into heat exchanger 14 turns into dry saturated vapor from superheated vapor while maintaining equal pressure in heat exchanger 14, radiates latent heat of condensation and is gradually liquefied, and then, turns into moist vapor in the gas-liquid mixed state. Then, all the coolant condenses into saturated liquid (point C).

The coolant in the saturate liquid state flowing out of heat exchanger 14 flows into electronic expansion valve 38 through coolant passages 22 and 33. At electronic expansion valve 38, the coolant is subjected to throttle expansion, lowered in temperature and pressure without changing the specific enthalpy, and turns into moist vapor in the gas-liquid mixed state (point G). Electronic expansion valve 38 has a function as a temperature lowering unit for lowering the temperature of the coolant on the upstream side of cooling unit 30, and lowering the temperature of the coolant supplied to cooling unit 30.

The coolant in the moist vapor state that has been subjected to throttle expansion by electronic expansion valve 38 flows through coolant passage 34 into cooling passage 32 of cooling unit 30, thereby cooling HV equipment 31. In cooling unit 30, heat is radiated to the coolant that has passed through electronic expansion valve 38 and has been decreased in temperature and pressure, thereby cooling HV equipment 31. By heat exchange with HV equipment 31, the coolant is heated to increase the dryness of the coolant. The coolant absorbs heat ofHV equipment 31 as latent heat of evaporation and thereby evaporates while maintaining the equal pressure. When all the coolant turns into dry saturated vapor, the coolant vapor is further increased in temperature by sensible heat and turns into superheated vapor (point A).

After that, the coolant is sucked into compressor 12 through bypass route 41, gas-liquid separator 40 and coolant passage 27. Compressor 12 compresses the coolant flowing from coolant passage 27. In accordance with such a cycle, the coolant continuously repeats the state changes of compression, condensation, throttle expansion, and evaporation.

As described above, cooling device 1 according to the present embodiment includes bypass route 41 bypassing heat exchanger 15, expansion valve 16 and heat exchanger 18, and switching valve 52 selectively switching the coolant flow. When normal cooling of HV equipment 31 is required, switching valve 52 selects the flow of the coolant flowing through coolant passage 36, to form a flow of the coolant flowing from cooling unit 30 into heat exchanger 15. When the amount of heat generated by HV equipment 31 is increased, switching valve 52 switches the coolant flow to select the flow of the coolant flowing through bypass route 41, thereby forming a flow of the coolant flowing from cooling unit 30 through bypass route 41 into gas-liquid separator 40.

Accordingly, heat is transferred from HV equipment 31 to the coolant until the coolant condensed and liquefied in heat exchanger 14 turns into superheated vapor, so that HV equipment 31 can be cooled. Since the amount of heat exchange between the coolant and HV equipment 31 in cooling unit 30 can be increased, the ability to cool HV equipment 31 is enhanced. Since the ability to cool HV equipment 31 can be enhanced in accordance with an increase in the amount of heat generated from HV equipment 31, cooling performance suitable for the amount of heat generated from HV equipment 31 can be achieved.

Furthermore, electronic expansion valve 38 is provided on the upstream side of cooling unit 30. When the amount of heat generated by HV equipment 31 is increased, the opening degree of this electronic expansion valve 38 is adjusted to subject the coolant to throttle expansion, thereby turning the coolant into a low-temperature and low-pressure mist-like coolant, and lowering the temperature of the coolant flowing through cooling unit 30. By supplying a low-temperature coolant to cooling unit 30, the heat transfer efficiency from HV equipment 31 to the coolant can be improved, so that the amount of heat absorbed by the coolant as latent heat of evaporation from HV equipment 31 can be increased. When the low-temperature coolant is evaporated by the heat ofHV equipment 31, the amount of heat exchange between the coolant and HV equipment 31 can be increased. Accordingly, the ability to cool HV equipment 31 can be further improved.

When improvement in the ability to cool HV equipment 31 is required in accordance with the cooling performance required for HV equipment 31, compressor 12 and electronic expansion valve 38 are controlled to lower the temperature of the coolant flowing through cooling unit 30, with the result that the temperature of the coolant supplied to cooling unit 30 can be optimally set. The equipment for lowering the temperature of the coolant may be any equipment, and for example, another heat exchanger, a Peltier devices or the like may be disposed on the upstream side of cooling unit 30. In the case of the configuration as described above in which the coolant is subjected to throttle expansion by electronic expansion valve 38 to lower the temperature of the coolant, the device structure can be simplified while the temperature of the coolant can be lowered without using additional motive power.

When comparing the motive power of compressor 12 shown in Fig. 2 and the motive power of compressor 12 shown in Fig. 5 each of which are represented by shading of dashed-two dotted lines, the motive power of compressor 12 shown in Fig. 5 is relatively small. For example, in the case where the opening degree of electronic expansion valve 38 is set such that the coolant of about 60 °C at the outlet of heat exchanger 14 is cooled to a temperature that is lower by 5 °C than the outside-air temperature (for example, 25 °C when the outside-air temperature is 30 °C), the motive power of compressor 12 is reduced to approximately half of the motive power required during the operation of the air conditioner shown in Fig. 1. In order to achieve the coolant temperature suitable for the cooling performance required for HV equipment 31, a part or all of the coolant is caused to flow through bypass route 41, thereby allowing control for decreasing the motive power of compressor 12.

Bypass route 41 is coupled to gas-liquid separator 40, and the coolant flowing from cooling unit 30 through bypass route 41 flows into gas-liquid separator 40. Gas-liquid separator 40 separates the coolant into a gas-phase coolant and a liquid-phase coolant. Gas-liquid separator 40 stores coolant liquid that is a liquid-phase coolant and coolant vapor that is a gas-phase coolant. The coolant liquid in the saturated liquid state is stored in gas-liquid separator 40. The coolant liquid separated into a gas-phase coolant and a liquid-phase coolant in gas-liquid separator 40 is stored in gas-liquid separator 40. Gas-liquid separator 40 functions as a liquid storage container temporarily storing the coolant liquid in a liquid-state coolant.

When the coolant circulates not through heat exchangers 15 and 18 but only through heat exchanger 14, a refrigeration cycle employing only heat exchanger 14 is applied. Accordingly, the amount of the coolant required for cooling HV equipment 31 is reduced. Gas-liquid separator 40 is provided and a part of the coolant is stored in gas-liquid separator 40, thereby allowing adjustment of the coolant amount within the cycle. Accordingly, the amount of the coolant circulating through the refrigeration cycle can be optimized. Thus, it becomes possible to suppress occurrence of a defect that the coolant amount within the refrigeration cycle is excessively increased to raise the pressure.

A prescribed amount of the coolant liquid is stored in gas-liquid separator 40, so that the flow rate of the coolant supplied to cooling unit 30 can be maintained also during load change. Gas-liquid separator 40 has a liquid reservoir function, serves as a buffer against load change and can absorb this load change. Therefore, the cooling performance for HV equipment 31 can be stabilized.

When the amount of heat exchange between the coolant and HV equipment 31 in cooling unit 30 is relatively small and the amount of heat received by the coolant from HV equipment 31 is relatively small, heating of the coolant in cooling unit 30 is suppressed. Accordingly, the coolant that has been subjected to heat exchange with HV equipment 31 in cooling unit 30 and flows through bypass route 41 into gas-liquid separator 40 may be in the state of moist vapor in the gas-liquid two-phase state where saturated liquid and saturated vapor are mixed. In this case, the coolant is separated into a gas phase and a liquid phase within gas-liquid separator 40. The coolant in the gas-liquid two-phase state that flows into gas-liquid separator 40 is separated into coolant liquid in the liquid state and coolant vapor in the gaseous state within gas-liquid separator 40.

Within gas-liquid separator 40, the coolant liquid accumulates in the lower portion while the coolant vapor accumulates in the upper portion. Coolant passage 27 has an end through which the coolant vapor flows out of gas-liquid separator 40. This end is coupled to the ceiling part of gas-liquid separator 40. Only the coolant vapor is caused to flow from the ceiling side of gas-liquid separator 40 through coolant passage 27 to the outside of gas-liquid separator 40. Thereby, only the gas-phase coolant that has been reliably separated into a gas-phase coolant and a liquid-phase coolant by gas-liquid separator 40 can be supplied to compressor 12. Consequently, the coolant liquid can be prevented from flowing into compressor 12, so that it becomes possible to prevent occurrence of defects caused in compressor 12 by inclusion of a liquid component into compressor 12.

As switching valve 52 switching the communication state between bypass route 41 and each of coolant passages 35 and 36, a three-way valve may be disposed at the branch between bypass route 41 and each of coolant passages 35 and 36, as described above. Alternatively, a valve capable of opening and closing the coolant route may be provided at each of coolant passages 35 and 36 and bypass route 41, so that switching valve 52 may be formed by these plurality of open-close valves. In each case, HV equipment 31 can be efficiently cooled during both of operation and discontinuation of vapor compression refrigeration cycle 10. It is considered that the space required for arranging the three-way valve may be smaller than the space required for arranging a plurality of open-close valves. Thus, by using such a three-way valve, cooling device 1 can be provided that is further reduced in size and excellent in vehicle mountability. On the other hand, the open-close valve can be inexpensive since this valve only has to have a simple structure allowing the coolant passage to be opened and closed. By using a plurality of open-close valves, a relatively low-cost cooling device 1 can be provided.

In the setting shown in Fig. 1, all the coolant flows into heat exchanger 18. In contrast, in the setting show in each of Figs. 3 and 4, since a part of the coolant flows so as to bypass heat exchanger 18, the flow rate of the coolant flowing into heat exchanger 18 is decreased. In other words, when the ability to cool HV equipment 31 needs to be improved, for example, such as when the sport driving mode is selected, the ability to cool the vehicle cabin may deteriorate. In this case, the influence upon the cooling ability can be alleviated by adjusting the flow rate of the coolant by controlling the opening degree of flow rate regulating valve 28 so as to implement both of the cooling ability for HV equipment 31 and the air-conditioning cooling ability. After recognizing the influence upon the air-conditioning cooling ability in the state where the vehicle running performance is prioritized, the driver is to select a sport driving mode.

In the above-described embodiment, an explanation has been given with regard to an example in which HV equipment 31 serving as a heat source is cooled by cooling device 1. In the case where the device to be cooled by cooling device 1 is for example a battery, when the temperature is too low, the chemical change within the battery may be suppressed to cause a decrease in the output power density. Accordingly, moderate warming is required. In cooling device 1 according to the present embodiment, when heat exchange between the coolant and the outside air in heat exchanger 14 is suppressed by reducing the air volume of condenser fan 42, cooling of the coolant in heat exchanger 14 can be suppressed, so that the coolant flowing into cooling unit 30 can be maintained at a relatively higher temperature. In this case, control can be performed such that the coolant is condensed in heat exchanger 14 and cooling unit 30, and the battery can be warmed in cooling unit 30 by receiving heat from the coolant. On the other hand, when it is desired to rapidly cool the battery, electronic expansion valve 38 is narrowed to lower the temperature of the coolant supplied to cooling unit 30, thereby allowing improvement in the ability to cool the battery.

For example, assume that the equipment to be cooled by cooling device 1 is a capacitor. When the temperature of the capacitor is relatively low, condensation of the coolant in heat exchanger 14 is suppressed, thereby relatively increasing the specific enthalpy of the coolant flowing into cooling unit 30, so that the capacitor can be warmed. The capacitor repeats charging/discharging momentarily. In this case, however, since the capacitor can be cooled by the low-temperature coolant that has been turned into a mist state by throttle expansion in electronic expansion valve 38, the cooling performance for the capacitor is improved. Therefore, since the number of cells in the capacitor can be reduced, significant cost reduction for the device can be achieved.

### (Second Embodiment)

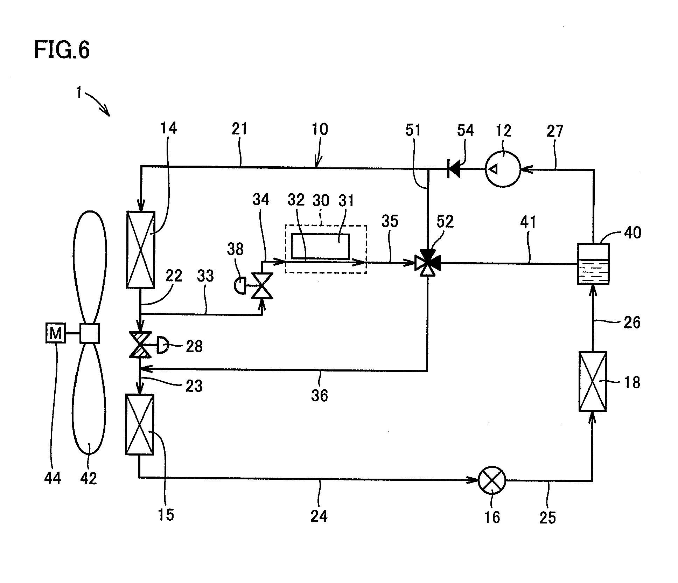

Fig. 6 is a schematic diagram showing the configuration of cooling device 1 according to the second embodiment. Switching valve 52 in the first embodiment is provided as a three-way valve, whereas switching valve 52 in the second embodiment is a four-way valve. Switching valve 52 is provided as a four-way valve having pipe connection ports at four positions. Coolant passage 35 is connected to the first pipe connection port of switching valve 52. Coolant passage 36 is connected to the second pipe connection port of switching valve 52. Bypass route 41 is connected to the third pipe connection port of switching valve 52. Communication passage 51 is connected to the fourth pipe connection port of switching valve 52.

Communication passage 51 allows communication between coolant passage 21 through which the coolant flows between compressor 12 and heat exchanger 14, and coolant passage 35 forming a route of the coolant flowing from cooling unit 30 toward expansion valve 16. Switching valve 52 is switched to be opened or closed, thereby switching among the flow of the coolant flowing from coolant passage 35 toward coolant passage 36, the flow of the coolant flowing from coolant passage 35 toward bypass route 41 and the flow of the coolant flowing from coolant passage 35 toward communication passage 51. Switching valve 52 is provided such that the flow of the coolant flowing from cooling unit 30 toward communication passage 51 can be formed. Switching valve 52 is switched to be opened or closed, thereby allowing or disallowing flow of the coolant through communication passage 51.

By using switching valve 52 to switch the route of the coolant, the coolant having cooled HV equipment 31 can be caused to flow through the route arbitrarily selected from a route extending through coolant passages 36 and 23 to heat exchanger 15, a route extending through bypass route 41 to gas-liquid separator 40 on the upstream side of compressor 12, or a route extending through communication passage 51 and coolant passage 21 to heat exchanger 14. A four-way valve is used as switching valve 52, and the setting for opening/closing switching valve 52 is changed, thereby implementing the configuration that allows flow of the coolant through communication passage 51. Since this allows simplification of the device configuration, addition of devices can be suppressed and an increase in cost can be avoided.

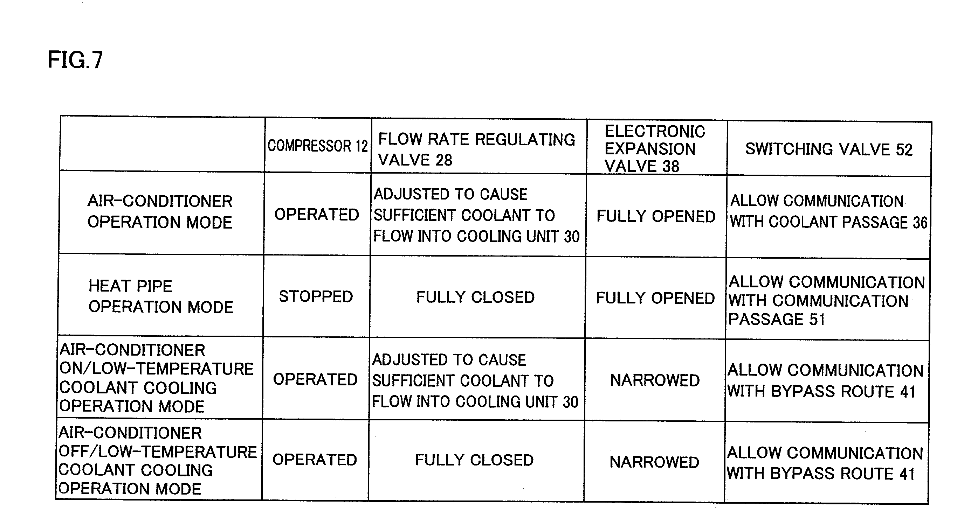

Fig. 7 is a diagram showing settings of compressor 12 and valves for each operation mode of cooling device 1. Fig. 7 shows the operation state of compressor 12, the setting of the opening degree of each of flow rate regulating valve 28, electronic expansion valve 38 and switching valve 52 in each operation mode in the case where cooling device 1 is operated in four different operation modes.

The "air-conditioner operation mode" of the operation modes shown in Fig. 7 is an operation mode in which the air conditioner for cooling the vehicle cabin is being operated, and normal cooling for HV equipment 31 is required. In this case, the coolant needs to flow through the entire vapor compression refrigeration cycle 10 including expansion valve 16 and heat exchanger 18 for the purpose of cooling the vehicle cabin. Accordingly, compressor 12 is in the operated state. The valve opening degree of flow rate regulating valve 28 is adjusted such that sufficient coolant for cooling HV equipment 31 flows into cooling unit 30. Electronic expansion valve 38 is fully opened.

Switching valve 52 is switched to be opened or closed so as to allow communication between coolant passage 35 and coolant passage 36, and to disallow bypass route 41 and communication passage 51 to be in communication with both of coolant passages 35 and 36. Switching valve 52 is operated such that the coolant is caused to flow from cooling unit 30 through heat exchanger 15 into expansion valve 16, to select the coolant route such that the coolant flows through the entire cooling device 1. Accordingly, the ability to cool the vehicle cabin using vapor compression refrigeration cycle 10 can be ensured while HV equipment 31 can be cooled efficiently.

It is to be noted that the operation state of cooling device 1 that has been described with reference to Fig. 1 in the first embodiment corresponds to this "air-conditioner operation mode".

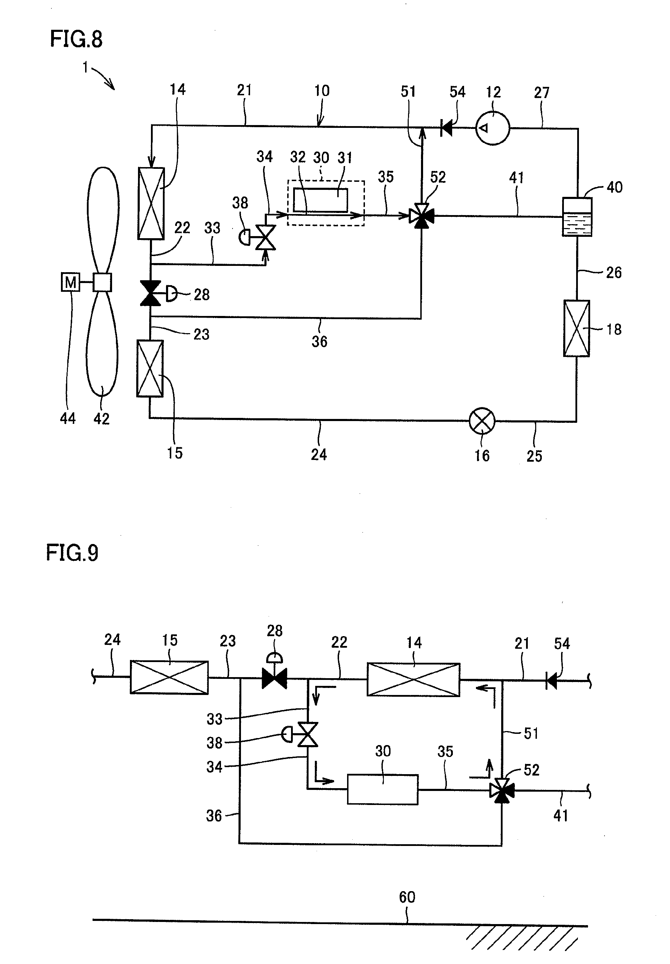

Fig. 8 is a schematic diagram showing cooling device 1 in the case where vapor compression refrigeration cycle 10 is stopped. Fig. 9 is a schematic diagram showing the flow of the coolant cooling HV equipment 31 while vapor compression refrigeration cycle 10 is stopped. The "heat pipe operation mode" of the operation modes shown in Fig. 7 is an operation mode in which the air conditioner for cooling the vehicle cabin is being stopped, and normal cooling for HV equipment 31 is required, as shown in Figs. 8 and 9.

In this case, vapor compression refrigeration cycle 10 is stopped, and the coolant does not need to flow through the entire vapor compression refrigeration cycle 10. Accordingly, compressor 12 is in the stopped state. Flow rate regulating valve 28 is fully closed. Electronic expansion valve 38 is fully opened. Switching valve 52 is switched to be opened or closed so as to allow communication between coolant passage 35 and communication passage 51, and to disallow coolant passage 36 and bypass route 41 to be in communication with both of coolant passage 35 and communication passage 51. Switching valve 52 is operated such that the coolant is circulated from cooling unit 30 to heat exchanger 14. The coolant does not flow from coolant passage 35 into coolant passage 36 and bypass route 41, but flows through communication passage 51.

Thereby, a closed looped route is formed that extends from heat exchanger 14 sequentially through coolant passages 22, 33, electronic expansion valve 38 and coolant passage 34 to cooling unit 30, and further, sequentially through coolant passage 35, switching valve 52, communication passage 51 and coolant passage 21 back to heat exchanger 14. Also, a looped route is formed through which the coolant having cooled HV equipment 31 and flowing through coolant passage 35 flows through communication passage 51 into heat exchanger 14, to cause the coolant to circulate between cooling unit 30 and heat exchanger 14 without flowing through compressor 12. Thus, the coolant route is selected such that the coolant is caused circulate through the looped route connecting cooling unit 30 and heat exchanger 14.

The coolant can be circulated through this looped route so as to flow between heat exchanger 14 and cooling unit 30 without operating compressor 12. When cooling HV equipment 31, the coolant evaporates with the latent heat of evaporation received from HV equipment 31. The coolant vapor evaporated by heat exchange with HV equipment 31 flows into heat exchanger 14 sequentially through coolant passage 35, communication passage 51 and coolant passage 21. In heat exchanger 14, the coolant vapor is cooled and condensed by wind caused by vehicle running or draft from condenser fan 42 or the radiator fan for engine cooling. The coolant liquid liquefied in heat exchanger 14 returns to cooling unit 30 sequentially through coolant passages 22 and 33, electronic expansion valve 38, and coolant passage 34.

In this way, the looped route extending through cooling unit 30 and heat exchanger 14 forms a heat pipe including HV equipment 31 as a heating unit and heat exchanger 14 as a cooling unit. Therefore, when vapor compression refrigeration cycle 10 is stopped, that is, even when cooling for the vehicle is stopped, HV equipment 31 can be reliably cooled without having to start compressor 12. HV equipment 31 can be cooled without having to use the motive power of compressor 12, and compressor 12 does not need to be continuously operated for cooling HV equipment 31. Accordingly, the power consumption of compressor 12 can be reduced to allow improvement in fuel efficiency of the vehicle and also allow extension of the operating life of compressor 12, so that the reliability of compressor 12 can be improved.

Fig. 9 shows a ground surface 60. Cooling unit 30 is disposed below heat exchanger 14 as seen in the vertical direction perpendicular to ground surface 60. In the looped route through which the coolant circulates between heat exchanger 14 and cooling unit 30, cooling unit 30 is disposed in the lower portion while heat exchanger 14 is disposed in the upper portion. Heat exchanger 14 is disposed at the position higher than cooling unit 30.

In this case, the coolant vapor heated and evaporated in cooling unit 30 rises through the looped route and reaches heat exchanger 14. Then, this coolant vapor is cooled and condensed in heat exchanger 14, and turns into a liquid coolant, which then goes down through the looped route by the action of gravity, and returns to cooling unit 30. In other words, a thermosyphon-type heat pipe is formed of cooling unit 30, heat exchanger 14, and a coolant route connecting them. The heat transfer efficiency from HV equipment 31 to heat exchanger 14 can be improved by forming a heat pipe. Accordingly, even when vapor compression refrigeration cycle 10 is stopped, HV equipment 31 can be more efficiently cooled without applying motive power.

Cooling device 1 in the second embodiment further includes a check valve 54. Check valve 54 is disposed in coolant passage 21 between compressor 12 and heat exchanger 14 on the side closer to compressor 12 than to the connection portion between coolant passage 21 and communication passage 51. Check valve 54 allows the coolant to flow from compressor 12 toward heat exchanger 14, but inhibits the coolant from flowing in the direction opposite thereto. In this way, it becomes possible to reliably form a closed-loop coolant route through which the coolant is circulated between heat exchanger 14 and cooling unit 30 during the heat pipe operation mode shown in Figs. 8 and 9.

If check valve 54 is not provided, the coolant may flow from communication passage 51 into coolant passage 21 on the compressor 12 side. By providing check valve 54, the flow of the coolant flowing from communication passage 51 toward compressor 12 can be reliably inhibited. Accordingly, the cooling ability for HV equipment 31 using a heat pipe formed by a looped coolant route can be prevented from decreasing while vapor compression refrigeration cycle 10 is stopped. Therefore, HV equipment 31 can be efficiently cooled also when cooling for the vehicle cabin is stopped.

Furthermore, when the amount of the coolant within the closed-loop coolant route becomes insufficient while vapor compression refrigeration cycle 10 is stopped, compressor 12 is operated only for a short time period, so that the coolant can be supplied through check valve 54 into the closed-loop route. Consequently, the amount of the coolant within the closed loop can be increased to increase the heat exchange processing amount in the heat pipe. Therefore, since the amount of the coolant in the heat pipe can be ensured, it becomes possible to avoid insufficient cooling ofHV equipment 31 resulting from shortage of the coolant amount.

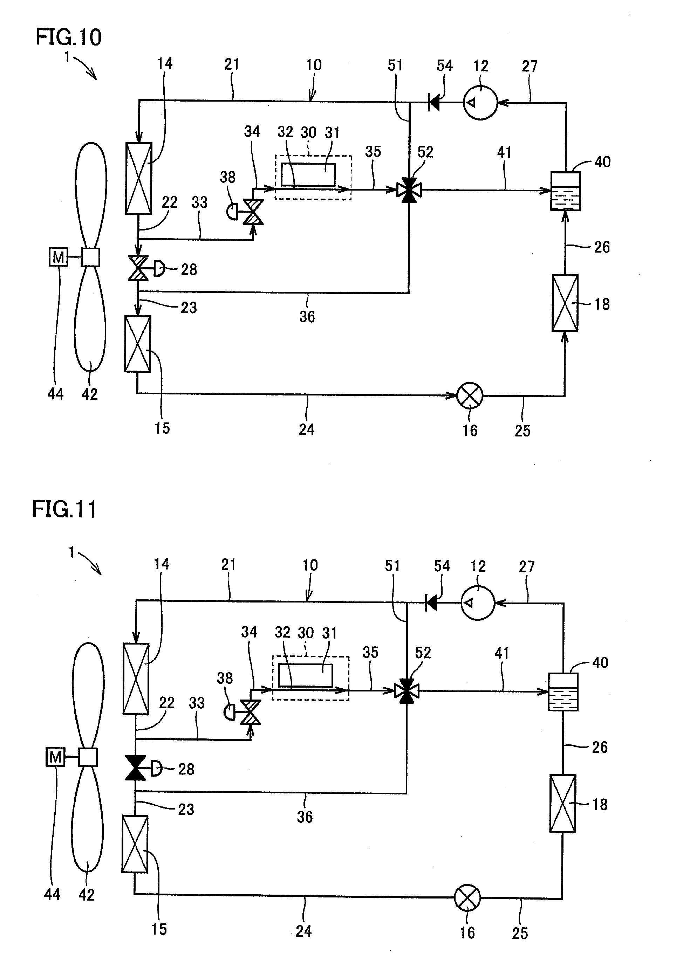

Fig. 10 is a schematic diagram showing cooling device 1 in the case where the required cooling performance for HV equipment 31 is raised while the air conditioner is operated. Fig. 10 shows the case where the air conditioner for cooling the vehicle cabin is being operated, and the case where improvement in cooling performance for HV equipment 31 is required because the heat amount generated from HV equipment 31 is increased, for example, such as the case where the driver operating the vehicle selects a sport driving mode and HV equipment 31 is operated in a highly loaded state.

The "air-conditioner ON/low-temperature coolant cooling operation mode" of the operation modes shown in Fig. 7 is an operation mode shown in Fig. 10 in which the air conditioner for cooling the vehicle cabin is being operated and improvement in the ability to cool HV equipment 31 is required. In this case, as with the state shown in Fig. 6, compressor 12 is in the operated state and the opening degree of flow rate regulating valve 28 is adjusted. In contrast, electronic expansion valve 38 is narrowed such that its opening degree is decreased. Switching valve 52 is switched to be opened or closed so as to allow communication between coolant passage 35 and bypass route 41, and to disallow coolant passage 36 and communication passage 51 to be in communication with both of coolant passage 35 and bypass route 41.

In this case, the coolant flowing through cooling unit 30 and used for cooling HV equipment 31 flows through switching valve 52 into bypass route 41, and flows into gas-liquid separator 40 on the upstream side of compressor 12. The coolant for cooling HV equipment 31 flows from cooling unit 30 through gas-liquid separator 40 into compressor 12, but does not flow into heat exchanger 15, expansion valve 16 and heat exchanger 18. Bypass route 41 is directly connected to switching valve 52 and gas-liquid separator 40, and provided as a coolant route bypassing heat exchanger 15, expansion valve 16 and heat exchanger 18.

Since the coolant flows into the route including expansion valve 16 and heat exchanger 18 by adjusting the opening degree of flow rate regulating valve 28, the low-temperature and low-pressure coolant that has been subjected to throttle expansion in expansion valve 16 is supplied to heat exchanger 18. Thereby, heat exchange is performed in heat exchanger 18 between the air-conditioning air for cooling the vehicle cabin and the coolant, thereby allowing the air-conditioning air to be cooled, so that the cooling ability can be ensured. As the coolant for cooling HV equipment 31 flows from cooling unit 30 through bypass route 41 toward the inlet of compressor 12, the ability to cool HV equipment 31 can be raised to allow efficient cooling ofHV equipment 31. Therefore, the cooling performance suitable for the amount of heat generated from HV equipment 31 can be achieved.

It is to be noted that the operation state of cooling device 1 that has been described with reference to Fig. 3 in the first embodiment corresponds to this "air-conditioner ON/low-temperature coolant cooling operation mode".

Fig. 11 is a schematic diagram showing cooling device 1 in the case where the required cooling performance for HV equipment 31 is raised while the air conditioner is stopped. Fig. 11 shows the case where the air conditioner is being stopped and the case where improvement in cooling performance for HV equipment 31 is required because the heat amount generated from HV equipment 31 is increased.

The "air-conditioner OFF/low-temperature coolant cooling operation mode" of the operation modes shown in Fig. 7 is an operation mode shown in Fig. 11, in which the air conditioner for cooling the vehicle cabin is being stopped, and improvement in the ability to cool HV equipment 31 is required. In this case, flow rate regulating valve 28 is fully closed (the opening degree is 0%). Electronic expansion valve 38 is narrowed such that its opening degree is decreased. Switching valve 52 is switched to be opened or closed so as to allow communication between coolant passage 35 and bypass route 41, and to disallow coolant passage 36 and communication passage 51 to be in communication with both of coolant passage 35 and bypass route 41. Compressor 12 is brought into an operated state in order to provide driving force that allows the coolant to circulate through the refrigeration cycle via bypass route 41. The coolant flowing through cooling unit 30 flows through switching valve 52 into bypass route 41, and further into gas-liquid separator 40.

The coolant for cooling HV equipment 31 flows from cooling unit 30 through bypass route 41 toward the inlet of compressor 12, thereby improving the ability to cool HV equipment 31, so that HV equipment 31 can be efficiently cooled. Consequently, the cooling performance suitable for the amount of heat generated from HV equipment 31 can be achieved. It is to be noted that the operation state of cooling device 1 that has been described with reference to Fig. 4 in the first embodiment corresponds to this "air-conditioner OFF/low-temperature coolant cooling operation mode".

According to cooling device 1 in the second embodiment, as in the first embodiment, the flow of the coolant flowing through bypass route 41 is selected when the amount of heat generated from HV equipment 31 is increased, thereby allowing formation of a flow of the coolant flowing from cooling unit 30 through bypass route 41 into gas-liquid separator 40. In accordance with an increase in the amount of heat generated from HV equipment 31, the ability to cool HV equipment 31 can be enhanced, and the cooling performance suitable for the amount of heat generated from HV equipment 31 can be achieved. When the amount of heat generated from HV equipment 31 is increased, the low-temperature coolant that has been turned into a mist state by throttle expansion for this coolant in electronic expansion valve 38 is supplied to cooling unit 30, thereby allowing a further increase in the amount of heat exchange between the coolant and HV equipment 31. Accordingly, the ability to cool HV equipment 31 can be further improved.

Furthermore, by providing communication passage 51, a looped route can be formed, through which the coolant is circulated between cooling unit 30 and heat exchanger 14 through communication passage 51 but not through compressor 12. The coolant can be circulated through this looped route to flow between heat exchanger 14 and cooling unit 30 without operating compressor 12. Since HV equipment 31 can be reliably cooled even in the state where the motive power for circulation of the coolant is not supplied from compressor 12, the motive power required for cooling HV equipment 31 can be reduced.

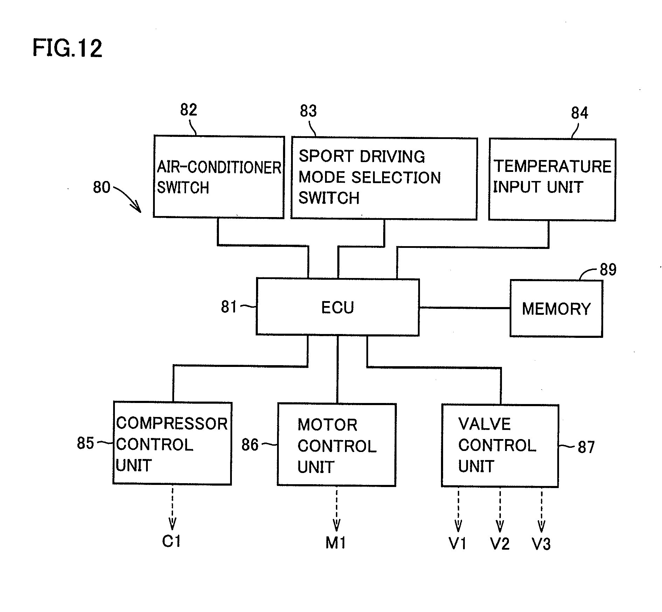

Hereinafter described will be control of cooling device 1 according to the second embodiment. Fig. 12 is a block diagram showing details of the configuration of a control unit 80. Control unit 80 shown in Fig. 12 includes an ECU (Electric Control Unit) 81 controlling cooling device 1. ECU 81 receives a signal from an air-conditioner switch 82 indicating that the air conditioner is ON or OFF. Air-conditioner switch 82 is provided, for example, on the instrument panel in the forward part within the vehicle cabin. By the vehicle occupant operating air-conditioner switch 82, the air conditioner is switched between ON and OFF to start or stop cooling of the vehicle cabin.

From a sport driving mode selection switch 83, ECU 81 receives a signal indicating whether the vehicle is set in the normal driving mode and the sport driving mode. Sport driving mode selection switch 83 is provided, for example, on the instrument panel in the forward part within the vehicle cabin. When the vehicle occupant operates sport driving mode selection switch 83, the normal driving mode or the sport driving mode is selected.

ECU 81 receives a signal indicating a temperature from a temperature input unit 84. Temperature input unit 84 receives an input of the temperature of the coolant at the inlet and outlet of cooling unit 30 from the sensor detecting the temperature of the coolant flowing into cooling unit 30 and the temperature of the coolant flowing out of cooling unit 30. Temperature input unit 84 may also receive an input of the temperature of the outside air near cooling device 1 and the temperature of the air-conditioning air that is adjusted by heat exchange in heat exchanger 18.

Control unit 80 also includes a compressor control unit 85 controlling compressor 12 to be started and stopped; a motor control unit 86 controlling the rotation speed of motor 44; and a valve control unit 87 controlling flow rate regulating valve 28, electronic expansion valve 38 and switching valve 52 to be opened and closed. Control unit 80 also includes a memory 89 such as an RAM (Random Access Memory) and an ROM (Read Only Memory). Cooling device 1 is controlled by ECU 81 executing various processes in accordance with the control program stored in memory 89.

Compressor control unit 85 receives a control instruction transmitted from ECU 81, and transmits a signal C1 to compressor 12 that instructs compressor 12 to be started or stopped. Valve control unit 87 receives a control instruction transmitted from ECU 81, transmits a signal V1 to flow rate regulating valve 28 that gives an instruction for the opening degree of flow rate regulating valve 28, transmits a signal V2 to electronic expansion valve 38 that gives an instruction for the opening degree of electronic expansion valve 38, and transmits a signal V3 to switching valve 52 that gives an instruction for setting switching valve 52 to be opened or closed. Motor control unit 86 receives a control instruction transmitted from ECU 81, and transmits a signal M1 to motor 44 that gives an instruction for the rotation speed of motor 44.

Based on whether the air conditioner is ON or OFF, based on whether the sport driving mode is selected or not, and based on various temperatures input into temperature input unit 84, ECU 81 controls start and discontinuation of the operation of compressor 12, the rotation speed of motor 44, the opening degrees of flow rate regulating valve 28 and electronic expansion valve 38, and the setting for opening or closing of switching valve 52. ECU 81 has a function as operation mode switching means for switching the operation mode of cooling device 1.

When the rotation speed of motor 44 is changed, the amount of heat exchange between the coolant and outside air in heat exchanger 14 is controlled. When the rotation speed of motor 44 is increased to increase the rotation speed of condenser fan 42, the flow rate of the air supplied to heat exchanger 14 is increased and the amount of heat exchange between the coolant and the outside air in heat exchanger 14 is increased. Consequently, the coolant cooling ability of heat exchanger 14 is improved. When the rotation speed of motor 44 is decreased to decrease the rotation speed of condenser fan 42, the flow rate of the air supplied to heat exchanger 14 is decreased and the amount of heat exchange between the coolant and the outside air in heat exchanger 14 is decreased. Consequently, the coolant cooling ability of heat exchanger 14 is decreased.

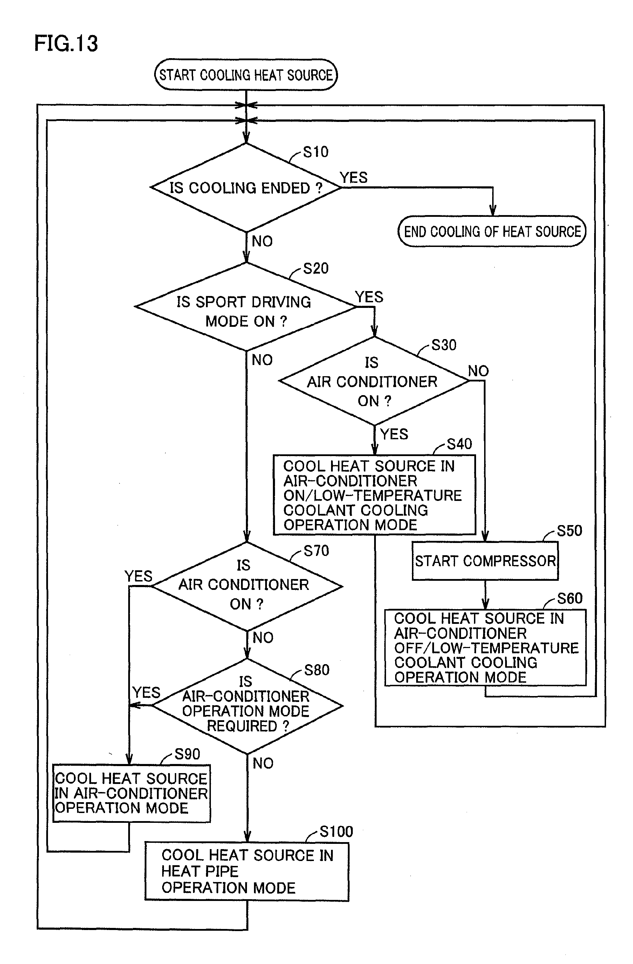

Fig. 13 is a flowchart illustrating an example of a method of controlling cooling device 1. As shown in Fig. 13, when cooling of HV equipment 31 serving as a heat source is started using cooling device 1, it is first determined in step (S10) whether cooling of the heat source is ended or not. If it is determined that cooling is not ended, it is determined in step (S20) whether the sport driving mode is selected or not by operation of sport driving mode selection switch 83.

As described above, the amount of heat generated from HV equipment 31 increases in the sport driving mode as compared with the normal driving mode. In step (S20), it is determined whether the sport driving mode is selected or not, thereby determining whether the amount of heat generated by HV equipment 31 is increased or decreased. When the intermediate value between the amount of generated heat from HV equipment 31 in the normal driving mode and the amount of generated heat from HV equipment 31 in the sport driving mode is set as a threshold value of the amount of generated heat, the amount of generated heat from HV equipment 31 at the time when the sport driving mode is selected is equal to or greater than the threshold value, and the amount of generated heat from HV equipment 31 at the time when the normal driving mode is selected is equal to or less than the threshold value.

In the case where it is determined in step (S20) that the sport driving mode is ON, that is, in the case where the sport driving mode is selected by operation of sport driving mode selection switch 83 and the amount of generated heat from HV equipment 31 is increased, it is determined in step (S30) whether the air conditioner is ON or not. Compressor 12 is being operated if the air conditioner is ON. Compressor 12 is being stopped if the air conditioner is OFF. When it is determined in step (S30) that the air conditioner is ON, the process proceeds to step (S40), where cooling device 1 cools HV equipment 31 in the air-conditioner ON/low-temperature coolant cooling operation mode.

At this time, the air conditioner is ON, and compressor 12 is started in order to cause the coolant to circulate through the entire vapor compression refrigeration cycle 10. Accordingly, compressor control unit 85 transmits signal C1 to compressor 12 for maintaining the operation of compressor 12. Valve control unit 87 transmits signal V1 to flow rate regulating valve 28 for adjusting the opening degree of flow rate regulating valve 28 so as to cause sufficient coolant to flow into cooling unit 30, transmits signal V2 to electronic expansion valve 38 for decreasing the opening degree of electronic expansion valve 38, and transmits signal V3 to switching valve 52 for switching between opening and closing of switching valve 52 so as to allow coolant passage 35 to be in communication with bypass route 41.

Since the coolant flows into the route including expansion valve 16 and heat exchanger 18 by adjusting the opening degree of flow rate regulating valve 28, the low-temperature and low-pressure coolant that has been subjected to throttle expansion in expansion valve 16 is supplied to heat exchanger 18. This allow heat exchange between the air-conditioning air for cooling the vehicle cabin and the coolant in heat exchanger 18, thereby allowing the air-conditioning air to be cooled, so that the ability to cool the vehicle cabin can be ensured. The coolant decreased in temperature by throttle expansion in electronic expansion valve 38 by adjusting the opening degree of electronic expansion valve 38 is caused to flow through cooling unit 30, to perform heat exchange between the coolant flowing through cooling passage 32 and HV equipment 31, thereby cooling HV equipment 31. The coolant that has cooled HV equipment 31 flows from cooling unit 30 through bypass route 41 toward the inlet of compressor 12. Consequently, since the ability to cool HV equipment 31 can be enhanced to allow efficient cooling of HV equipment 31, cooling performance suitable for the amount of generated heat from HV equipment 31 can be achieved.

After that, the control flow is returned to step (S 10), where it is determined whether cooling of the heat source is ended or not.

When it is determined in step (S30) that the air conditioner is OFF, the process proceeds to step (S50), and compressor 12 is started. Since the air conditioner is OFF and compressor 12 is stopped, compressor control unit 85 at this time transmits signal C1 for starting compressor 12 to compressor 12.

Then, in step (S60), cooling device 1 cools HV equipment 31 in the air-conditioner OFF/low-temperature coolant cooling operation mode. Valve control unit 87 transmits signal V1 to flow rate regulating valve 28 for fully closing flow rate regulating valve 28, transmits signal V2 to electronic expansion valve 38 for decreasing the opening degree of electronic expansion valve 38, and transmits signal V3 to switching valve 52 for switching between opening and closing of switching valve 52 so as to allow coolant passage 35 to be in communication with bypass route 41.

Since the air conditioner is OFF, it is not necessary to cause the coolant to flow through heat exchanger 18. Accordingly, flow rate regulating valve 28 is fully closed, to stop the flow of the coolant toward the route including expansion valve 16 and heat exchanger 18. The coolant decreased in temperature by throttle expansion in electronic expansion valve 38 by adjusting the opening degree of electronic expansion valve 38 is caused to flow through cooling unit 30, to perform heat exchange between the coolant flowing through cooling passage 32 and HV equipment 31, thereby cooling HV equipment 31. The coolant having cooled HV equipment 31 flows from cooling unit 30 through bypass route 41 toward the inlet of compressor 12. Consequently, since the ability to cool HV equipment 31 can be enhanced to allow efficient cooling of HV equipment 31, cooling performance suitable for the amount of heat generated from HV equipment 31 can be achieved.

After that, the control flow is returned to step (S10), where it is determined whether cooling of the heat source is ended or not.

When it is determined in step (S20) that the sport driving mode is OFF, that is, the normal driving mode is selected by operation of sport driving mode selection switch 83, it is determined in step (S70) whether the air conditioner is ON or not. When it is determined in step (S70) that the air conditioner is ON, the process proceeds to step (S90), where cooling device 1 cools HV equipment 31 in the air-conditioner operation mode.

When it is determined in step (S70) that the air conditioner is OFF, it is determined in step (S80) whether cooling of the heat source in the air-conditioner operation mode is required or not. For example, based on the detection value of the temperature input into temperature input unit 84, it can be determined whether cooling in the air-conditioner operation mode is required or not. Specifically, when the outlet temperature of cooling unit 30 exceeds the inlet temperature thereof, when the outside air temperature is higher than a prescribed temperature (for example, 25 °C), when the temperature of the air-conditioning air is higher than a prescribed temperature (for example, 20 °C), or the like, it is determined that the cooling ability in cooling unit 30 is deteriorated, and the control instruction for starting compressor 12 can be transmitted to compressor control unit 85.

Alternatively, also when the vehicle runs in the circumstance where the amount of generated heat from HV equipment 31 is increased, for example, such as in the state where the vehicle runs on a climbing road, HV equipment 31 may be cooled in the air-conditioner operation mode. The ability of cooling device 1 to cool HV equipment 31 is relatively greater in the air-conditioner operation mode in which compressor 12 is operated than in the heat pipe operation mode. Accordingly, by operating cooling device 1 in the air-conditioner operation mode to cool HV equipment 31, overheating of HV equipment 31 can be reliably prevented. When it is determined that cooling of the heat source in the air-conditioner operation mode is required, the process proceeds to step (S90), where cooling device 1 cools HV equipment 31 in the air-conditioner operation mode.

In this case, compressor control unit 85 transmits signal C1 to compressor 12 that instructs compressor 12 to be started. Valve control unit 87 transmits signal V1 to flow rate regulating valve 28 for adjusting the opening degree of flow rate regulating valve 28 so as to allow sufficient coolant to flow into cooling unit 30, transmits signal V2 to electronic expansion valve 38 for fully opening electronic expansion valve 38, and transmits signal V3 to switching valve 52 for switching between opening and closing of switching valve 52 so as to allow coolant passage 35 to be in communication with coolant passage 36.

Since the coolant flows through the route including expansion valve 16 and heat exchanger 18 by adjusting the opening degree of flow rate regulating valve 28, the low-temperature and low-pressure coolant that has been subjected to throttle expansion in expansion valve 16 is supplied to heat exchanger 18. This allow heat exchange between the air-conditioning air for cooling the vehicle cabin and the coolant in heat exchanger 18, thereby allowing the air-conditioning air to be cooled, so that the ability to cool the vehicle cabin can be ensured. Furthermore, by adjusting the opening degree of flow rate regulating valve 28, a sufficient amount of the coolant for cooling HV equipment 31 flows through cooling unit 30. Consequently, the coolant having been heat-exchanged with the outside air and cooled in heat exchanger 14 is caused to flow through cooling unit 30, to perform heat exchange between the coolant flowing through cooling passage 32 and HV equipment 31, so that HV equipment 31 can be cooled.

After that, the control flow is returned to step (S 10), where it is determined whether cooling of the heat source is ended or not.

When it is determined in step (S80) that cooling of the heat source in the air-conditioner operation mode is not required, cooling device 1 cools the heat source in the heat pipe operation mode in step (S 100). Since the air conditioner is OFF in this case, compressor 12 is in the stopped state. Accordingly, compressor control unit 85 transmits signal C1 to compressor 12 for maintaining compressor 12 in the stopped state. Valve control unit 87 transmits signal V1 to flow rate regulating valve 28 for fully closing flow rate regulating valve 28, transmits signal V2 to electronic expansion valve 38 for fully opening electronic expansion valve 38, and transmits signal V3 to switching valve 52 for switching between opening and closing of switching valve 52 so as to allow coolant passage 35 to be in communication with communication passage 51.

Consequently, a looped route is formed, through which the coolant is circulated between cooling unit 30 and heat exchanger 14, thereby forming a thermosyphon-type heat pipe. The liquid-phase coolant cooled in heat exchanger 14 is caused to flow through cooling unit 30 by the action of gravity, to perform heat exchange between the coolant flowing through cooling passage 32 and HV equipment 31, thereby cooling HV equipment 31. The coolant vapor that has been heated and evaporated in cooling unit 30 rises through the looped route and reaches heat exchanger 14 again.

After that, the control flow is returned to step (S 10), where it is determined whether cooling of the heat source is ended or not.

If it is determined in step (S10) that cooling of the heat source is ended, supply of the coolant to cooling unit 30 is stopped, to stop cooling ofHV equipment 31.

As described above, cooling device 1 in the second embodiment can cool HV equipment 31 serving as a heat source in both of the "air-conditioner operation mode" and the "heat pipe operation mode" based on the operation state of the air conditioner when the sport driving mode is not selected. Since HV equipment 31 can be reliably cooled without having to start compressor 12 in the heat pipe operation mode, compressor 12 does not need to be continuously operated for cooling HV equipment 31. Accordingly, the power consumption of compressor 12 can be reduced to allow improvement in fuel efficiency of the vehicle and also allow extension of the operating life of compressor 12, so that the reliability of compressor 12 can be improved.

Switching valve 52 is controlled to be opened or closed in accordance with start or discontinuation of the operation of compressor 12 for switching the operation mode of cooling device 1. Thereby, switching between the air-conditioner operation mode and the heat pipe operation mode can be reliably performed, and the coolant can flow through an appropriate route for each operation mode.

The operation mode of cooling device 1 can be switched by the occupant of an electric vehicle manually operating a control panel to switch the air conditioner to be turned ON/OFF. When the air conditioning within the vehicle cabin is not required, the vehicle occupant turns the air conditioner to be OFF. Thereby, the operation mode of cooling device 1 is switched such that HV equipment 31 is cooled in the heat pipe operation mode. When the heat pipe operation mode is selected, compressor 12 is stopped. Accordingly, the operation time period of compressor 12 can be further shortened. Consequently, the effects of reducing the power consumption of compressor 12 and improving the reliability of compressor 12 can be achieved more remarkably.

Alternatively, when the sport driving mode is selected, HV equipment 31 serving as a heat source can be cooled in the "air-conditioner ON/low-temperature coolant cooling operation mode" or in the "air-conditioner OFF/low-temperature coolant cooling operation mode". When the sport driving mode is selected and the amount of generated heat from HV equipment 31 is increased, the flow of the coolant flowing through bypass route 41 is selected by switching valve 52, to form a flow of the coolant flowing from cooling unit 30 through bypass route 41 into gas-liquid separator 40. Consequently, the ability to cool HV equipment 31 can be enhanced, and cooling performance suitable for the amount of generated heat from HV equipment 31 can be achieved. The coolant is subjected to throttle expansion in electronic expansion valve 38 on the upstream side of cooling unit 30 to lower the temperature of the coolant flowing through cooling unit 30, thereby allowing further improvement in the ability to cool HV equipment 31.

In the above-described embodiments, explanations have been given with regard to cooling device 1 cooling electrical devices mounted in the vehicle by referring to HV equipment 31 as an example. The electrical devices may be any electrical devices as long as they are at least operated to generate heat, but are not limited to exemplified electric devices such as an inverter and a motor generator. In the case where a plurality of electrical devices need to be cooled, it is desirable that these plurality of electrical devices have a common targeted temperature range for cooling. The targeted temperature range for cooling is an appropriate temperature range as a temperature environment where electrical devices are operated.

Furthermore, the heat source cooled by cooling device 1 of the present invention is not limited to electrical devices mounted in the vehicle, but may be any devices generating heat, or a part of any devices generating heat.

Although the embodiments of the present invention have been described as above, it should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### INDUSTRIAL APPLICABILITY

The cooling device according to the present invention may be particularly advantageously applied to cooling of an electrical device by using a vapor compression refrigeration cycle for cooling a vehicle cabin in a vehicle such as an electric vehicle equipped with electrical devices such as a motor generator, an inverter and a battery.

### REFERENCE SIGNS LIST

1 cooling device, 10 vapor compression refrigeration cycle, 12 compressor, 14, 15, 18 heat exchanger, 16 expansion valve, 21, 22, 23, 24, 25, 26, 27, 33, 34, 35, 36 coolant passage, 28 flow rate regulating valve, 30 cooling unit, 31 HV equipment, 32 cooling passage, 38 electronic expansion valve, 40 gas-liquid separator, 41 bypass route, 42 condenser fan, 51 communication passage, 52 switching valve, 80 control unit, 81 ECU, 82 air-conditioner switch, 83 sport driving mode selection switch, 84 temperature input unit, 85 compressor control unit, 87 valve control unit.

## Claims

1. A cooling device (1) cooling a heat source (31), said cooling device (1) comprising:
a compressor (12) for circulating a coolant;
a first heat exchanger (14) performing heat exchange between said coolant and outside air;
a decompressor (16) decompressing said coolant;
a second heat exchanger (18) performing heat exchange between said coolant and air-conditioning air;
a cooling unit (30) provided on a route of said coolant flowing between said first heat exchanger (14) and said decompressor (16), and cooling said heat source (31) using said coolant;
a bypass route (41) bypassing said decompressor (16) and said second heat exchanger (18); and
a route selection unit (52) selectively switching between a flow of said coolant flowing from said cooling unit (30) toward said decompressor (16) and a flow of said coolant flowing through said bypass route (41).

2. The cooling device (1) according to claim 1, comprising a temperature lowering unit (38) lowering a temperature of said coolant, wherein
said temperature lowering unit (38) lowers the temperature of said coolant flowing through said cooling unit (30) when said route selection unit (52) selects the flow of said coolant flowing through said bypass route (41).

3. The cooling device (1) according to claim 2, comprising an electronic expansion valve (38) provided on a route of said coolant flowing between said first heat exchanger (14) and said cooling unit (30).

4. The cooling device (1) according to any one of claims 1 to 3, comprising a gas-liquid separator (40) provided on a route of said coolant flowing between said second heat exchanger (18) and said compressor (12), wherein
said coolant flowing from said cooling unit (30) through said bypass route (41) flows into said gas-liquid separator (40).

5. The cooling device (1) according to any one of claims 1 to 4, wherein said route selection unit (52) selects the flow of said coolant flowing through said bypass route (41) when an amount of generated heat by said heat source (31) is increased.

6. The cooling device (1) according to any one of claims 1 to 5, comprising a communication passage (51) allowing communication between a route of said coolant flowing between said compressor (12) and said first heat exchanger (14), and a route of said coolant flowing between said cooling unit (30) and said decompressor (16).

7. The cooling device (1) according to claim 6, wherein said route selection unit (52) can form a flow of said coolant flowing from said cooling unit (30) toward said communication passage (51).

8. A method of controlling a cooling device (1) cooling a heat source (31), said cooling device (1) including
a compressor (12) for circulating a coolant,
a first heat exchanger (14) performing heat exchange between said coolant and outside air,
a decompressor (16) decompressing said coolant,
a second heat exchanger (18) performing heat exchange between said coolant and air-conditioning air,
a cooling unit (30) provided on a route of said coolant flowing between said first heat exchanger (14) and said decompressor (16), and cooling said heat source (31) using said coolant,
a bypass route (41) bypassing said decompressor (16) and said second heat exchanger (18), and
a route selection unit (52) selectively switching between a flow of said coolant flowing from said cooling unit (30) toward said decompressor (16) and a flow of said coolant flowing through said bypass route (41), said method comprising:
the step (S20) of determining an amount of generated heat by said heat source (31); and
the step (S40, S60) of cooling said heat source (31) by forming the flow of said coolant flowing through said bypass route (41) when it is determined in said step (S20) of determining an amount of generated heat that the amount of generated heat is equal to or higher than a threshold value.

9. The method of controlling a cooling device (1) according to claim 8, wherein
said cooling device (1) includes an electronic expansion valve (38) provided on a route of said coolant flowing between said first heat exchanger (14) and said cooling unit (30), and
in said step (S40, S60) of cooling said heat source, an opening degree of said electronic expansion valve (38) is decreased to cool said heat source (31).

10. The method of controlling a cooling device (1) according to claim 8 or 9, comprising:
the step (S30) of determining an operation state of said compressor (12) when it is determined in said step (S20) of determining an amount of generated heat that the amount of generated heat is equal to or higher than the threshold value; and
the step (S50) of starting said compressor (12) when it is determined in said step (S30) of determining an operation state that said compressor (12) is being stopped.
